# EUROPÄISCHE PATENTSCHRIFT

(11) **EP 4 493 916 B1**
(45) Veröffentlichungstag und Bekanntmachung des Hinweises auf die Patenterteilung: **18.11.2026**
(21) Anmeldenummer: 23719269.5
(22) Anmeldetag: 16.03.2023
(51) Int. Cl.: G01N 21/64, G01N 21/77

(54) **VERFAHREN UND VORRICHTUNG ZUR MARKIERUNGSFREIEN DETEKTION EINES ANALYTEN**
METHOD AND DEVICE FOR THE MARKER-FREE DETECTION OF AN ANALYTE
PROCÉDÉ ET DISPOSITIF DE DÉTECTION SANS MARQUEUR D'UN ANALYTE

(30) Priorität: 16.03.2022 DE 102022001000
(43) Veröffentlichungstag der Anmeldung: 22.01.2025
(73) Patentinhaber: Fluldect GmbH, 07745 Jena (DE)
(72) Erfinder: SCHRÖTER, Tobias, 07751 Jena (DE); HIMMELHAUS, Michael, 07616 Bürgel (DE)
(74) Vertreter: Pfenning, Meinig & Partner mbB
(86) Internationale Anmeldenummer: PCT/DE2023/000018
(87) Internationale Veröffentlichungsnummer: WO 2023/174468

(56) Entgegenhaltungen:
- DE-A1- 102014 104 595
- WELLER A ET AL: "Whispering gallery mode biosensors in the low-Q limit", APPLIED PHYSICS B ; LASERS AND OPTICS, SPRINGER, BERLIN, DE, vol. 90, no. 3-4, 12 February 2008 (2008-02-12), pages 561 - 567, XP019588254, ISSN: 1432-0649

## Beschreibung

Es wird ein Verfahren und eine Vorrichtung zur markierungsfreien Detektion eines Analyten in einem Fluid vorgestellt. Es wird mindestens ein dielektrischer Mikrosensor eingesetzt, der einen Mikroresonator und eine auf dem Mikroresonator aufgebrachte Adsorbatschicht zur Anbindung eines Analyten aufweist. Der Mikroresonator besteht aus einem Partikel, das ein dielektrisches Material und einen Fluoreszenz-Marker aufweist. Ferner weist der Mikroresonator einen größeren optischen Brechungsindex auf als der optische Brechungsindex eines zu analysierenden Fluids. Der Mikroresonator ist dazu geeignet, bei einer Anregung des Fluoreszenz-Markers in seinem Innenraum eine Ausprägung von mehr als einer Resonanzmode zuzulassen. Aus spektralen Positionen von mindestens zwei erfassten optischen Resonanzmoden des Mikrosensors wird eine optische Dicke der Adsorbatschicht des Mikrosensors ermittelt und hieraus bestimmt, in welchem Maß ein Analyt an den mindestens einen Mikrosensor gebunden hat.

Whispering Gallery Mode (WGM) basierte Sensoren eignen sich zur Bestimmung physikalischer, chemischer und/oder biochemischer Parameter eines Fluids. Hierbei wird ein fluoreszierendes Mikropartikel von wenigen Mikrometern Durchmesser als mikroskopischer optischer Sensor verwendet. Zur Erfüllung der jeweiligen spezifischen Aufgabe können Mikropartikel und ihre Oberfläche entsprechend konditioniert werden, beispielsweise, indem ihre Oberfläche mittels einer aufgebrachten biochemischen Schicht spezifisch funktionalisiert wird (M. Himmelhaus, Microsensors on the Fly, Optik & Photonik, 2016, Vol. 11, Seiten 43-47).

Wird die Fluoreszenz in dem Mikropartikel angeregt, so emittiert der Farbstoff Licht in einer gegenüber der Anregung längeren Wellenlänge. Da dieses Licht in beliebige Raumrichtungen emittiert wird, kann es zufällig auch unter streifendem Einfall auf die Mikropartikelwandung treffen und eine Totalreflektion innerhalb des Mikropartikels (d.h. in einem Innenraum des Mikropartikels) erfahren, insofern der Brechungsindex des Mikropartikels größer als der des umgebenden Mediums ist. Das Mikropartikel stellt dabei, abhängig von seinem Durchmesser, eine optische Kavität spezifischer Größe dar, die von einzelnen Wellenlängen des spektral breitbandigen Fluoreszenzspektrums in Form von Resonanz-Moden ausgefüllt werden kann. Das vom Mikropartikel nach außen emittierte Spektrum ist dabei von diesen charakteristischen Moden geprägt.

Verändert sich der optische Durchmesser des Mikropartikels, beispielsweise durch die Anbindung (bzw. Anlagerung) einer zu analysierenden Substanz (d.h. eines Analyten) an dessen Außenfläche, so verändert sich auch das charakteristische Spektrum des Mikropartikels. Mittels spektraler Analyse kann das charakteristische Spektrum des Mikropartikels analysiert werden, wodurch auf den optisch wirksamen Durchmesser des Mikropartikels und somit indirekt auf die Oberflächenbelegung mit Analyt geschlossen werden kann. Ein für diese Vorgehensweise geeignetes Mikropartikel wird im Folgenden auch als "Mikroresonator" bezeichnet.

Ein Mikroresonator kann umhüllt sein von einer Adsorbatschicht, die physikalisch und/oder chemisch auf die Oberfläche des Mikroresonators aufgebracht bzw. an dieser angebunden ist und eine der jeweiligen Anwendung des Mikroresonators angemessene Funktion besitzt. Dies kann beispielsweise im Falle des Einsatzes des Mikroresonators als Biosensor eine Adsorbatschicht (z.B. eine organische Schicht) sein, die dazu geeignet ist, spezifisch einen bestimmten Analyten zu binden. Die Adsorbatschicht unterscheidet sich in der Regel chemisch vom Material des Mikroresonators und kann daher einen vom Grundmaterial des Mikroresonators verschiedenen optischen Brechungsindex aufweisen. Der Mikroresonator mitsamt seiner Adsorbatschicht kann auch als "Mikrosensor" bezeichnet werden.

Bei Anlagerung von biologischen Materialien (wie z.B. Proteinen, Antikörpern, Peptiden, Oligonukleotiden, DNA, RNA, Viren, Bakterien und/oder deren Bestandteile) an die Oberfläche des Mikrosensors ändert sich der optische Durchmesser des Mikrosensors typischerweise nur um wenige Nanometer, d.h. im Vergleich zum Gesamtdurchmesser des Mikrosensors (der gewöhnlich mehrere Mikrometer beträgt) nur sehr wenig. Allein die herstellungsbedingten Durchmessertoleranzen von Mikroresonatoren liegen in der Größenordnung von mindestens 50 nm (typische Standardabweichung kommerziell erhältlicher Mikropartikel: 1-5%) und sind somit bereits deutlich größer als die durch Adsorption von Biomolekülen zu erwartenden Änderungen.

Aus diesem Grund musste bei bisher bekannten Verfahren zur Quantifizierung der Oberflächenbelegung des jeweiligen Mikroresonators das nach erfolgter Adsorption ermittelte Spektrum immer auf ein Spektrum vom selben Mikroresonator vor der Adsorption referenziert werden, der Mikroresonator also mindestens einmal vor und einmal nach erfolgter Bindung des Analyten vermessen werden (siehe z.B. WO 02/13337 A1, WO 2005/116615 A1, Foreman et al., Advances in Optics and Photonics, 2015, Vol. 7, Seiten 168-240).

Diese Notwendigkeit in den bekannten Verfahren aus dem Stand der Technik ist zeitaufwändig, unökonomisch und schränkt die Anwendbarkeit von WGM-basierten mikroskopischen Sensoren sehr ein. So bedeutet das Erfordernis einer mehrfachen Vermessung ein- und desselben Mikroresonators unter anderem, dass dieser mehrfach im Laufe des Messverfahrens auffindbar sein muss. Bisherige Verfahren nutzen daher immobilisierte Mikrosensoren, die beispielsweise auf starre Oberflächen adsorbiert, auf biologischen Zellen adsorbiert oder in Mikrostrukturen gehalten sind.

Es besteht somit ein Wunsch, ein Messverfahren zu ermöglichen, in dem sich ein Mikrosensor frei im zu untersuchenden Medium bewegen kann, da das Messverfahren somit schneller und ökonomischer durchgeführt werden kann und eine umfassendere Analyse ermöglicht wird. Dies ist jedoch bei den im Stand der Technik bekannten Verfahren zur Quantifizierung der Oberflächenbelegung aufgrund der Immobilisierung des Mikrosensors nicht möglich. Ferner sind durch die Immobilisierung des Mikrosensors in den Verfahren aus dem Stand der Technik keine fortlaufenden (d.h. kontinuierlichen) Messungen möglich, d.h., es ist nicht möglich, ein Fluid mit einem potenziellen Analyten quasi kontinuierlich und vollumfänglich abzutasten. Folglich eignen sich bestehende Implementierungen der WGM-basierten Mikrosensorik bislang nur für bestimmte Laborsysteme, nicht aber für Anwendungen im Bereich der fortlaufenden Prozessüberwachung. Ein Beispiel für ein Laborsystem, welches sich durch den Einsatz von mikrofluidischen Kanälen mit integrierten Haltestrukturen vom sonstigen Stand-der-Technik abhebt, wurde von Bischler et al. vorgestellt (R. Bischler et al., Eur. Phys. J. Special Topics, 2014, Vol. 223, Seiten 2041-2055 sowie DE 10 2014 104 595 A1). Hierbei werden die Mikrosensoren nur temporär von den Haltestrukturen in ihrer Position fixiert und können von einer automatisierten mechanischen Verschiebeeinheit immer wieder in Messposition gefahren werden. Nach Beendigung der Messung kann der mikrofluidische Kanal gereinigt und neu befüllt werden. Durch sukzessives Anfahren mehrerer Mikrosensoren während der Messung kann die Aussagekraft des Messergebnisses erhöht werden. Dennoch eignet sich das System nicht für den Einsatz in der fortlaufenden Prozessüberwachung, da sowohl der Volumenstrom durch den mikrofluidischen Kanal, als auch die Anzahl der pro Messung einsetzbaren Mikrosensoren begrenzt ist und dabei weit unter den in der fortlaufenden Prozessüberwachung gestellten Anforderungen liegt. Außerdem werden auch hier, wie beim Stand-der-Technik üblich, relative Verschiebungen in den Resonanz-moden dazu genutzt, auf eine erfolgte Oberflächenbelegung zu schließen, so dass eine Mehrfachmessung ein und desselben Mikrosensors zwingend erforderlich ist.

Die mangelnde Eignung von markierungsfreien Biosensoren für den Einsatz im Bereich der fortlaufenden Prozessüberwachung gilt jedoch nicht nur für die bisherigen Implementierungen der WGM-basierten Mikrosensorik, sondern ist auch ein Mangel, der andere, gängige Verfahren zur markierungsfreien Detektion biologischer Spezies, wie beispielsweise die Oberflächenplasmonenresonanz (SPR), die Quarzmikrowaage (QMC) und/oder die Ellipsometrie, betrifft. Bei allen diesen Verfahren wird die spezifisch mit dem Analyten reagierende Sensoroberfläche in der Regel als Wandung in einem Mikrokanal ausgeformt. Durch den Mikrokanal kann die Sensoroberfläche mit dem Analyten und mit für die Konditionierung der Oberfläche erforderlichen Medien versorgt werden. Da sich in Mikrokanälen in der Regel jedoch laminare Strömungen ausbilden, bedeutet dies, dass an der Sensoroberfläche die Strömung nahezu ruht und der Transport des Analyten zur Sensoroberfläche somit diffusionslimitiert ist. Hierdurch ergeben sich nicht nur lange Messzeiten, sondern bei Verarmung der Diffusionszone auch verfälschte (d.h. inkorrekte) Bindungskinetiken und somit eine mit Fehlern behaftete Bestimmung einer Affinität und Avidität des untersuchten Analyten an seinen Bindungspartner.

Ein Versuch, dieses Manko der bestehenden Implementierungen für ein WGMbasiertes Mikrosensor-System zu überwinden, ist in der US 8,779,389 B2 beschrieben. In dem dort offenbarten Verfahren strömen die Mikropartikel frei mit dem zu analysierenden Medium und werden zufällig, wenn sie vom optischen System erfasst werden, ausgelesen. Dabei ist davon auszugehen, dass jedes Mikropartikel nur ein einziges Mal gemessen wird, so dass die erforderliche Referenzierung nicht am selben Mikropartikel erfolgen kann, sondern anderweitig bewerkstelligt werden muss. Die US 8,779,389 B2 schlägt hierzu vor, das jeweils eine erfasste charakteristische Spektrum des Mikropartikels mit einem Satz geeignet vorbestimmter charakteristischer Spektren zu vergleichen und über diesen Vergleich ein bestpassendes vorbestimmtes Spektrum zu ermitteln. An das Mikropartikel adsorbierte Analyten werden detektiert über Abweichungen des gemessenen Spektrums vom bestpassenden vorbestimmten Spektrum. Wie ein bestpassendes vorbestimmtes Spektrum ohne zusätzlich gemessene Referenz (z. B. vor Interaktion des Mikropartikels mit dem Analyten) bestimmt werden kann, wo es doch bei Anwesenheit des Analyten gleichzeitig vom gemessenen Spektrum abweicht, wird nicht näher beschrieben. Zusätzlich kann vorab der Brechungsindex des Mediums bestimmt und mit dem aus der Messung unter Bezug auf das bestpassende Spektrum verglichen werden. Für die Bestimmung des Brechungsindizes des Mediums werden im Vorfeld exemplarisch eine für eine statistische Auswertung ausreichende Menge an Mikropartikeln im gewählten Medium unter Abwesenheit des Analyten vermessen, um sich auf diese Weise eine statistische Referenz zu beschaffen, aus der der Brechungsindex des Mediums bestimmt werden kann. Abweichungen vom Referenzwert werden auch hier als Indiz für die Präsenz des Analyten im Medium gewertet. In jeder seiner Ausführungsformen gibt das Verfahren somit lediglich qualitativ Auskunft über die Präsenz eines Analyten im untersuchten Medium im Sinne einer "Ja/Nein-Sensorik" und genügt daher nicht den oben erläuterten Anforderungen an eine quantitative Biosensorik, die beispielsweise auch die Messung von Bindungskinetiken und, abgeleitet davon, die Bestimmung von Affinitäten und Aviditäten erlaubt. Im Gegensatz dazu ermittelt das Verfahren der vorliegenden Erfindung eine optische Dicke einer auf dem Mikroresonator befindlichen Adsorbatschicht, die auch den potenziellen Analyten miteinbezieht. Diese optische Dicke einer Adsorbatschicht wird unabhängig vom Brechungsindex des Mediums bestimmt und ergibt ein quantitatives Maß für die Oberflächenbelegung des Mikroresonators, wodurch auch quantitative Aussagen über die Konzentration des Analyten im Medium sowie die Messung von Bindungskinetiken möglich werden.

DE 10 2014 104595 A1 betrifft ein Verfahren zur label-freien Detektion eines Analyten, bei dem Partikel in einer Haltestruktur gehalten und optisch angeregt werden, sodass ein erstes Emissionsspektrum bestimmt wird. Die Partikel werden anschließend aus der Haltestruktur entfernt und ein zweites Emissionsspektrum bestimmt, wobei insbesondere eine Resonanzmode der Partikel bzw. deren Veränderung ausgewertet wird. Durch den Vergleich der Resonanzmoden bzw. deren Verschiebung kann eine Analyse des Analyten erfolgen.

Weller et al. ("Whispering gallery mode biosensors in the low-Q limit", Applied Physics B, Bd. 90, Nr. 3-4) offenbaren eine Untersuchung von Flüstergaleriemoden (WGM) von farbstoffdotierten Polystyrolkugeln mit Durchmessern von 20 bis hinunter zu 1,5 µm hinsichtlich ihres Auftretens und ihrer Linienbreite durch Anregung des gesamten Modenspektrums innerhalb des Emissionsbereichs des Farbstoffs, wobei die Moden niedrigster Ordnung (q=1), die sich am dichtesten an der inneren Partikeloberfläche bewegen, mittels eines Least-Square-Fits ihren individuellen Quantenzahlen zugeordnet werden, was zu einer genauen Bestimmung von Partikelradius und Exzentrizität führt.

Ausgehend hiervon war es die Aufgabe der vorliegenden Erfindung, ein Verfahren und eine Vorrichtung bereitzustellen, welche(s) die im Stand der Technik bekannten Nachteile nicht aufweist. Insbesondere sollte es mit dem Verfahren und der Vorrichtung möglich sein, einen Analyten in einer Probe markierungsfrei, schnell, ökonomisch und auf kontinuierliche Art und Weise und ohne Risiko von verfälschten Ergebnissen quantitativ zu detektieren, wobei es zudem möglich sein sollte, unverfälschte (d.h. korrekte) Bindungskinetiken des Analyten an ein Zielmolekül zu erfassen.

Die Aufgabe wird gelöst durch das Verfahren mit den Merkmalen von Anspruch 1 und die Vorrichtung mit den Merkmalen von Anspruch 8. Die abhängigen Ansprüche zeigen vorteilhafte Weiterbildungen auf.

Erfindungsgemäß wird ein Verfahren zur markierungsfreien Detektion eines Analyten in einem Fluid bereitgestellt, umfassend die Schritte (oder bestehend daraus)
a) Bereitstellung von mindestens einem dielektrischen Mikrosensor in einem Behälter, wobei der mindestens eine Mikrosensor einen Mikroresonator und eine auf dem Mikroresonator aufgebrachte Adsorbatschicht zur Anbindung eines Analyten enthält oder daraus besteht, wobei der Mikroresonator aus einem Partikel besteht, das ein dielektrisches Material und einen Fluoreszenz-Marker enthält oder daraus besteht, wobei der Mikroresonator einen größeren optischen Brechungsindex aufweist als der optische Brechungsindex eines zu analysierenden Fluids, wobei der Mikroresonator dazu geeignet ist, in einem Innenraum des Mikroresonators bei einer Anregung einer Fluoreszenz des Fluoreszenz-Markers eine Ausprägung von mehr als einer Resonanzmode zuzulassen;
b) Kontaktieren des mindestens einen Mikrosensors mit einem zu analysierenden Fluid, das einen Analyten enthalten könnte;
c) Einstrahlen von Licht auf den mindestens einen Mikrosensor in dem Fluid, wobei das Licht eine Wellenlänge aufweist, die dazu geeignet ist, den Fluoreszenz-Marker des mindestens einen Mikrosensors zur Fluoreszenz anzuregen;
d) Erfassen von mindestens zwei optischen Resonanzmoden des mindestens einen Mikrosensors aus einem detektierten Fluoreszenzlicht des mindestens einen Mikrosensors;
e) Ermittlung einer optischen Dicke der Adsorbatschicht des mindestens einen Mikrosensors in dem Fluid aus spektralen Positionen der mindestens zwei erfassten Resonanzmoden über numerische Algorithmik; und
f) Bestimmung, basierend auf der zuvor ermittelten optischen Dicke der Adsorbatschicht des mindestens einen Mikrosensors, in welchem Maß ein Analyt im Fluid an den mindestens einen Mikrosensor gebunden hat.

Das erfindungsgemäße Verfahren sieht vor, mindestens zwei emittierte Moden (d.h. mehr als eine emittierte Mode) des Mikrosensors zu detektieren. Anhand der Position der detektierten Moden zueinander kann anschließend die absolute Dicke der Adsorbatschicht bestimmt werden. Wird die so erhaltene Dicke der Adsorbatschicht mit der aus dem Fertigungsprozess auf den Mikroresonator aufgebrachten, bekannten Dicke der Adsorbatschicht verglichen, kann qualitativ und ohne verfälschenden Einfluss geschlussfolgert werden, zu welchem Grad eine Anbindung (bzw. Anlagerung) eines Analyten an die Oberfläche des Mikrosensors stattgefunden hat, d.h. in welchem Maß ein Analyt im Fluid an den Mikrosensor gebunden hat. Mit der Bestimmung absoluter Dicken von Adsorbatschichten aus Einzelmessungen an den Mikrosensoren bezieht sich das erfindungsgemäße Verfahren auf eine allgemeine Messgröße, die unter unterschiedlichsten Prozessbedingungen bestimmt werden kann. Folglich eignet sich das erfindungsgemäße Verfahren für einen Einsatz unter sich ständig ändernden Prozessbedingungen und auch für eine fortlaufende (d.h. kontinuierliche) Prozessüberwachung. Da das Erfordernis der Einhaltung identischer Prozessbedingungen wie bei Verfahren aus dem Stand der Technik obsolet wird, kann das erfindungsgemäße Verfahren zudem einfacher, schneller, ökonomischer und mit einem geringeren apparativen Aufwand durchgeführt werden.

Unter dem Begriff "Fluoreszenz-Marker" werden erfindungsgemäß insbesondere auch Quantum-Dots verstanden.

In dem Verfahren kann das Partikel des Mikroresonators einen Durchmesser im Bereich von 1 µm bis 20, bevorzugt 2 µm bis 15 µm, besonders bevorzugt 4 µm bis 10 µm, aufweisen.

Ferner kann die Adsorbatschicht eine Dicke im Bereich von 0,5 nm bis 30 nm, bevorzugt 1 nm bis 20 nm, besonders bevorzugt 1,5 nm bis 10 nm, insbesondere 2 nm bis 8 nm, aufweisen, wobei unter der Dicke eine räumliche Ausdehnung der Adsorbatschicht in radialer Richtung von einem Mittelpunkt des Mikroresonators verstanden wird. Bei sehr dünnen Adsorbatschichten im Bereich weniger Nanometer (z.B. Dicke ≤ 2 nm) kann die Trennung von optischem Brechungsindex und geometrischer Schichtdicke nicht mehr sicher erfolgen. Das primäre Resultat der Ermittlung der optischen Dicke der Adsorbatschicht des mindestens einen Mikrosensors ist dann eine sog. "optische Schichtdicke", also ein Produkt der Art n_{Ads} * d_{Ads}, wobei n_{Ads} den optischen Brechungsindex der Adsorbatschicht repräsentiert und d_{Ads} ihre Dicke in radialer Richtung. Diese Definition ist vergleichbar mit der aus der Optik bekannten optischen Weglänge, die ihrerseits ein Produkt aus optischem Brechungsindex und geometrischer Weglänge darstellt. Für die Zwecke der vorliegenden Erfindung ist die Kenntnis der optischen Schichtdicke ausreichend, da sie sich mit der Adsorption eines Analyten an die Adsorbatschicht ändert, selbst wenn die geometrische Schichtdicke beispielsweise wegen Diffusion des Analyten oder seinem Austausch mit zuvor nichtspezifisch gebundenen Molekülen eine nur geringe Änderung erfahren sollte. Außerdem sind die optischen Brechungsindizes der meisten Materialien, die für den Aufbau der Adsorbatschicht relevant sind (z.B. Biomoleküle), sehr ähnlich zu den optischen Brechungsindizes des anzubindenden Analyten. Die optischen Brechungsindizes liegen typischerweise im Bereich von 1,43 bis 1,48.

In dem Verfahren erfolgt bevorzugt vor Schritt b) kein Schritt einer Ermittlung einer optischen Dicke der Adsorbatschicht des mindestens einen Mikrosensors. Diese Ausführungsform erlaubt ein schnelleres und ökonomischeres Durchführen des Verfahrens.

Die Ermittlung der optischen Dicke der Adsorbatschicht kann in dem Verfahren gemäß einer rigorosen klassischen Feldtheorie erfolgen.

In dem Verfahren kann die Ermittlung der optischen Dicke der Adsorbatschicht aus spektralen Positionen der mindestens zwei erfassten Resonanzmoden und mindestens einem weiteren Parameter, der ausgewählt ist aus der Gruppe bestehend aus relative Amplituden der mindestens zwei erfassten Resonanzmoden und Linienbreiten der mindestens zwei erfassten Resonanzmoden, über numerische Algorithmik erfolgen. Diese Ausführungsform hat den Vorteil, dass die optische Dicke der Adsorbatschicht noch genauer ermittelt werden kann. Indem ein Mikroresonator eingesetzt wird, der dazu geeignet ist, in einem Innenraum des Mikroresonators bei einer Anregung einer Fluoreszenz des Fluoreszenz-Markers eine Ausprägung von mehr als einer Resonanzmode zuzulassen, wird ermöglicht, dass eine Linienbreite der einzelnen Moden kleiner ist als ihr spektraler Abstand, sodass die Moden spektral separierbar sind.

Ferner kann in dem Verfahren aus spektralen Positionen der mindestens zwei erfassten Resonanzmoden, und bevorzugt aus mindestens einem weiteren Parameter, der ausgewählt ist aus der Gruppe bestehend aus relative Amplituden der mindestens zwei erfassten Resonanzmoden und Linienbreiten der mindestens zwei erfassten Resonanzmoden, über numerische Algorithmik ein weiterer Parameter des mindestens einen Mikrosensors ermittelt werden. Der weitere Parameter ist bevorzugt ausgewählt aus der Gruppe bestehend aus Durchmesser des mindestens einen Mikrosensors, Brechungsindex des mindestens einen Mikrosensors, Brechungsindex der Adsorbatschicht des mindestens einen Mikrosensors und Kombinationen hiervon.

Abgesehen davon kann in dem Verfahren aus spektralen Positionen der mindestens zwei erfassten Resonanzmoden, und bevorzugt aus mindestens einem weiteren Parameter, der ausgewählt ist aus der Gruppe bestehend aus relative Amplituden der mindestens zwei erfassten Resonanzmoden und Linienbreiten der mindestens zwei erfassten Resonanzmoden, über numerische Algorithmik ein Parameter des Fluids ermittelt werden, bevorzugt eine optische Eigenschaft des Fluids ermittelt werden.

Der in dem Verfahren eingesetzte mindestens eine Mikrosensor kann als im Wesentlichen sphärisches Partikel ausgestaltet sein. Dies ist von Vorteil, da die Eigenschaft des Mikroresonators des Mikrosensors, Resonanzmoden auszubilden, von der Form des Mikroresonators abhängt. Sphärische Partikel bilden aufgrund ihrer hohen Symmetrie von der jeweiligen Propagationsebene innerhalb des Partikels unabhängige Resonanzmoden aus, was deren Detektion, insbesondere für in einem Fluid frei bewegliche Partikel, erleichtert. Partikel, die sehr stark asphärisch sind (z.B. irregulär geformt sind, d.h., keine Symmetrieachse aufweisen), zeigen keine beobachtbaren Resonanzmoden, weil Licht zu schnell aus den Partikeln herausgestreut wird. Die Lebensdauern der Resonanz-moden ist damit für solche Partikel so kurz, dass die Linienbreiten sich überlagern und damit nicht mehr beobachtbar sind.

Der Fluoreszenz-Marker des Mikroresonators kann in einem Innenraum des Mikroresonators angeordnet sein oder an einer Außenfläche des Mikroresonators angeordnet sein.

Das Erfassen von mindestens zwei optischen Resonanzmoden des mindestens einen Mikrosensors kann durch die Erfassung von Licht erfolgen, das an dem mindestens einen Mikrosensor gestreut wird und/oder von dem mindestens einen Mikrosensor emittiert wird.

Der in dem Verfahren eingesetzte mindestens eine Mikrosensor kann frei beweglich vorliegen. Dies ist bevorzugt, da das Verfahren somit schneller und ökonomischer durchgeführt werden kann. Alternativ kann der mindestens eine Mikrosensor fixiert vorliegen, insbesondere an einer Innenoberfläche eines Fluidkanals fixiert vorliegen, in dem das Kontaktieren des mindestens einen Mikrosensors mit einem zu analysierenden Fluid, das einen Analyten enthalten könnte, erfolgt.

In dem Verfahren kann das Erfassen von mindestens zwei optischen Resonanz-moden des mindestens einen Mikrosensors mindestens einmal, optional mehrmals, wiederholt werden, um einen zeitlichen Verlauf der optischen Dicke der Adsorbatschicht des mindestens einen Mikrosensors aus spektralen Positionen der mindestens zwei erfassten Resonanzmoden, und bevorzugt aus mindestens einem weiteren Parameter, der ausgewählt ist aus der Gruppe bestehend aus relative Amplituden der mindestens zwei erfassten Resonanzmoden und Linienbreiten der mindestens zwei erfassten Resonanzmoden, über numerische Algorithmik zu ermitteln. Diese Ausführungsform hat den Vorteil, dass eine Bindungskinetik eines Analyten an den Mikrosensor erfasst werden kann. Im Gegensatz zu Verfahren aus dem Stand der Technik, die immobilisierte Mikrosensoren verwenden, ist die Bestimmung der Bindungskinetik mit dem erfindungsgemäßen Verfahren nicht fehlerbehaftet. Neben der Bindungskinetik selbst ist auch eine Aussage darüber möglich, ob diese bereits einen statischen Zustand erreicht hat. Aus der Quantifizierung der Menge von adsorbierten Analyten im statischen Zustand kann somit auf eine noch genauere und weniger fehlerbehaftete Art und Weise auf dessen Gehalt im untersuchten Fluid geschlossen werden.

In dem Verfahren kann zudem ein zeitlicher Verlauf von mindestens einem weiteren Parameter des mindestens einen Mikrosensors aus spektralen Positionen der mindestens zwei erfassten Resonanzmoden, und bevorzugt aus mindestens einem weiteren Parameter, der ausgewählt ist aus der Gruppe bestehend aus relative Amplituden der mindestens zwei erfassten Resonanzmoden und Linienbreiten der mindestens zwei erfassten Resonanzmoden, über numerische Algorithmik ermittelt werden. Der mindestens eine weitere Parameter kann hierbei ausgewählt sein aus der Gruppe bestehend aus Durchmesser des mindestens einen Mikrosensors, Brechungsindex des mindestens einen Mikrosensors, Brechungsindex der Adsorbatschicht des mindestens einen Mikrosensors, Brechungsindex des Fluids und Kombinationen hiervon. Vorteil an dieser Ausführungsform ist, dass auch ein zeitlicher Verlauf von anderen Parametern des mindestens einen Mikrosensors bzw. des Fluids des Analyten erfasst werden kann.

Erfindungsgemäß wird ferner eine Vorrichtung zur markierungsfreien Detektion eines Analyten in einem Fluid bereitgestellt, enthaltend (oder bestehend aus)
a) einen Behälter enthaltend mindestens einen dielektrischen Mikrosensor, wobei der mindestens eine Mikrosensor einen Mikroresonator und eine auf dem Mikroresonator aufgebrachte Adsorbatschicht zur Anbindung eines Analyten enthält oder daraus besteht, wobei der Mikroresonator aus einem Partikel besteht, das ein dielektrisches Material und einen Fluoreszenz-Marker enthält oder daraus besteht, wobei der Mikroresonator einen größeren optischen Brechungsindex aufweist als der optische Brechungsindex eines zu analysierenden Fluids, wobei der Mikroresonator dazu geeignet ist, in einem Innenraum des Mikroresonators bei einer Anregung einer Fluoreszenz des Fluoreszenz-Markers eine Ausprägung von mehr als einer Resonanzmode zuzulassen;
b) eine Lichtquelle zum Einstrahlen von Licht auf den mindestens einen Mikrosensor, wobei das Licht eine Wellenlänge aufweist, die dazu geeignet ist, den Fluoreszenz-Marker des mindestens einen Mikrosensors zur Fluoreszenz anzuregen,
c) eine Spektrale Analyseeinheit, die konfiguriert ist, mindestens zwei optische Resonanzmoden des mindestens einen Mikrosensors aus einem detektierten Fluoreszenzlicht zu erfassen;
d) eine Algorithmik-Einheit, die konfiguriert ist, aus spektralen Positionen der mindestens zwei erfassten Resonanzmoden eine optischen Dicke der Adsorbatschicht des mindestens einen Mikrosensors über numerische Algorithmik zu ermitteln; und
e) eine Analyse-Einheit, die konfiguriert ist, basierend auf der ermittelten optischen Dicke der Adsorbatschicht des mindestens einen Mikrosensors zu bestimmen, in welchem Maß ein Analyt an den mindestens einen Mikrosensor gebunden hat.

Mit der erfindungsgemäßen Vorrichtung kann qualitativ und sogar quantitativ und ohne verfälschenden Einfluss geschlussfolgert werden, zu welchem Grad eine Anbindung (bzw. Anlagerung) eines Analyten an die Oberfläche des Mikrosensors stattgefunden hat, d.h. in welchem Maß ein Analyt im Fluid an den Mikrosensor gebunden hat. Da die Vorrichtung eine Bestimmung absoluter Dicken von Adsorbatschichten aus Einzelmessungen an den Mikrosensoren ermöglicht, kann der Analyt unter unterschiedlichsten Prozessbedingungen bestimmt werden. Folglich eignet sich die erfindungsgemäße Vorrichtung für einen Einsatz unter sich ständig ändernden Prozessbedingungen und auch für eine fortlaufende (d.h. kontinuierliche) Prozessüberwachung. Da das Erfordernis der Einhaltung identischer Prozessbedingungen wie bei Vorrichtungen aus dem Stand der Technik obsolet wird, kann die Detektion des Analyten durch die erfindungsgemäße Vorrichtung zudem einfacher, schneller, ökonomischer und mit einem geringeren apparativen Aufwand durchgeführt werden.

Die erfindungsgemäße Vorrichtung erlaubt zudem, eine Bindung von einem Analyten an einen nicht-immobilisierten (d.h. frei beweglichen) Mikrosensor zu erfassen. Folglich benötigt die erfindungsgemäße Vorrichtung beispielsweise keine bewegliche Bühne, die sonst für eine Fixierung und gezielte Positionierung der Mikrosensoren über einer Detektionseinheit in Vorrichtungen aus dem Stand der Technik nötig wäre. Somit kann der Einsatz von kostspieligen mechanischen Positionierachsen und beispielsweise eines Luftspalts zwischen Detektionsoptik und der die Mikrosensoren haltenden Mikrostruktur entfallen. Mit dem Wegfall des Luftspalts können Immersionsobjektive mit numerischen Aperturen über 1.0 (theoretische Grenze für Luftspaltobjektive) verwendet werden, so dass die von den Mikrosensoren abgestrahlte Fluoreszenz zu einem höheren Anteil erfasst und der nachfolgenden spektroskopischen Optik zugeführt werden kann. Durch diese Erhöhung der Signalstärke kann die Zeit zur Erfassung des Emissionsspektrums des untersuchten Mikrosensors deutlich reduziert werden, so dass auch schnell strömende Mikrosensoren mit ausreichender Signalstärke detektiert und Genauigkeit ausgewertet werden können.

Das Partikel des Mikroresonators kann einen Durchmesser im Bereich von 1 µm bis 20, bevorzugt 2 µm bis 15 µm, besonders bevorzugt 4 µm bis 10 µm, aufweisen. Die Adsorbatschicht kann eine Dicke im Bereich von 0,5 nm bis 30 nm, bevorzugt 1 nm bis 20 nm, besonders bevorzugt 1,5 nm bis 10 nm, insbesondere 2 nm bis 8 nm, wobei unter der Dicke eine räumliche Ausdehnung der Adsorbatschicht in radialer Richtung von einem Mittelpunkt des Mikroresonators verstanden wird.

Die Spektrale Analyseeinheit kann konfiguriert sein, die Erfassung der mindestens zwei optischen Resonanzmoden des mindestens einen Mikrosensors erst vorzunehmen, nachdem der mindestens eine Mikrosensor mit einem Fluid kontaktiert wurde, das einen Analyten enthalten könnte. Diese Ausgestaltungsform hat den Vorteil, dass die Detektion des Analyten mit der Vorrichtung schneller und ökonomischer durchgeführt werden kann.

Die Algorithmik-Einheit kann konfiguriert sein, die Ermittlung der optischen Dicke der Adsorbatschicht gemäß einer rigorosen klassischen Feldtheorie vorzunehmen.

Ferner kann die Algorithmik-Einheit konfiguriert sein, aus spektralen Positionen der mindestens zwei erfassten Resonanzmoden und mindestens einem weiteren Parameter, der ausgewählt ist aus der Gruppe bestehend aus relative Amplituden der mindestens zwei erfassten Resonanzmoden und Linienbreiten der mindestens zwei erfassten Resonanzmoden, eine optischen Dicke der Adsorbatschicht des mindestens einen Mikrosensors über numerische Algorithmik zu ermitteln.

Abgesehen davon kann die Algorithmik-Einheit konfiguriert sein, aus spektralen Positionen der mindestens zwei erfassten Resonanzmoden, und bevorzugt aus mindestens einem weiteren Parameter, der ausgewählt ist aus der Gruppe bestehend aus relative Amplituden der mindestens zwei erfassten Resonanzmoden und Linienbreiten der mindestens zwei erfassten Resonanzmoden, über numerische Algorithmik einen weiteren Parameter des mindestens einen Mikrosensors zu ermitteln. Der weitere Parameter ist bevorzugt ausgewählt aus der Gruppe bestehend aus Durchmesser des mindestens einen Mikrosensors, Brechungsindex des mindestens einen Mikrosensors, Brechungsindex der Adsorbatschicht des mindestens einen Mikrosensors und Kombinationen hiervon.

Darüber hinaus kann die Algorithmik-Einheit konfiguriert sein, aus spektralen Positionen der mindestens zwei erfassten Resonanzmoden, und bevorzugt aus mindestens einem weiteren Parameter, der ausgewählt ist aus der Gruppe bestehend aus relative Amplituden der mindestens zwei erfassten Resonanzmoden und Linienbreiten der mindestens zwei erfassten Resonanzmoden, über numerische Algorithmik einen Parameter eines Fluids zu ermitteln, bevorzugt eine optische Eigenschaft eines Fluids zu ermitteln.

Der mindestens eine Mikrosensor ist bevorzugt als im Wesentlichen sphärisches Partikel ausgestaltet.

Der Fluoreszenz-Marker des Mikroresonators kann in einem Innenraum des Mikroresonators angeordnet sein oder an einer Außenfläche des Mikroresonators angeordnet sein.

Die Spektrale-Analyseeinheit kann konfiguriert sein, das Erfassen von mindestens zwei optischen Resonanzmoden des mindestens einen Mikrosensors durch die Erfassung von Licht vorzunehmen, das an dem mindestens einen Mikrosensor gestreut wird und/oder von dem mindestens einen Mikrosensor emittiert wird.

Der Behälter der Vorrichtung kann ferner ein Fluid enthalten, das einen Analyten enthalten könnte. Der Behälter ist optional ein Fluidkanal ist.

Der mindestens eine Mikrosensor kann im Behälter, optional in einem Fluidkanal der Vorrichtung, frei beweglich vorliegen. Diese Ausgestaltungsform ist vorteilhaft, da die Detektion des Analyten schneller und ökonomischer erfolgen kann. Alternativ kann der mindestens eine Mikrosensor in einem Fluidkanal der Vorrichtung fixiert vorliegen, insbesondere an einer Innenoberfläche eines Fluidkanals der Vorrichtung fixiert vorliegen, wobei der Fluidkanal insbesondere dazu geeignet ist, einem zu analysierenden Fluid, das einen Analyten enthalten könnte, den mindestens einen Mikrosensor zuzuführen.

Die Spektrale Analyseeinheit kann konfiguriert sein, das Erfassen von mindestens zwei optischen Resonanzmoden des mindestens einen Mikrosensors mindestens einmal, optional mehrmals, zu wiederholen, wobei die Algorithmik-Einheit konfiguriert ist, einen zeitlichen Verlauf der optischen Dicke der Adsorbatschicht des mindestens einen Mikrosensors aus spektralen Positionen der mindestens zwei erfassten Resonanzmoden, und bevorzugt aus mindestens einem weiteren Parameter, der ausgewählt ist aus der Gruppe bestehend aus relative Amplituden der mindestens zwei erfassten Resonanzmoden und Linienbreiten der mindestens zwei erfassten Resonanzmoden, über numerische Algorithmik zu ermitteln. Diese Ausführungsform hat den Vorteil, dass eine Bindungskinetik eines Analyten an den Mikrosensor erfasst werden kann.

Ferner kann die Spektrale Analyseeinheit konfiguriert sein, das Erfassen von mindestens zwei optischen Resonanzmoden des mindestens einen Mikrosensors mindestens einmal, optional mehrmals, zu wiederholen, wobei die Algorithmik-Einheit konfiguriert ist, einen zeitlichen Verlauf von mindestens einem weiteren Parameter des mindestens einen Mikrosensors aus spektralen Positionen der erfassten Resonanzmoden, und bevorzugt aus mindestens einem weiteren Parameter, der ausgewählt ist aus der Gruppe bestehend aus relative Amplituden der mindestens zwei erfassten Resonanzmoden und Linienbreiten der mindestens zwei erfassten Resonanzmoden, über numerische Algorithmik zu ermitteln, wobei der mindestens eine weitere Parameter besonders bevorzugt ausgewählt ist aus der Gruppe bestehend aus Durchmesser des mindestens einen Mikrosensors, Brechungsindex des mindestens einen Mikrosensors, Brechungsindex der Adsorbatschicht des mindestens einen Mikrosensors, Brechungsindex des Fluids und Kombinationen hiervon. Vorteil an dieser Ausführungsform ist, dass auch ein zeitlicher Verlauf von anderen Parametern des mindestens einen Mikrosensors bzw. des Fluids des Analyten erfasst werden kann.

Die Vorrichtung kann einen Fluidkanal enthalten. Der Fluidkanal enthält bevorzugt eine Zuleitung, die dazu geeignet ist, dem Fluidkanal den mindestens einen Mikrosensor zuzuführen. Ferner enthält der Fluidkanal bevorzugt einen Auslass, der dazu geeignet ist, den mindestens einen Mikrosensor aus dem Fluidkanal abzuführen, wobei der Auslass bevorzugt einen Abscheider für den mindestens einen Mikrosensor aufweist.

Der Fluidkanal kann zumindest bereichsweise mindestens eine transparente Wandung aufweisen, die für Licht mit einer Wellenlänge im Bereich der Emissionswellenlänge des Fluoreszenz-Markers durchlässig ist, wobei zwischen der transparenten Wandung und der Spektralen Analyseeinheit bevorzugt eine Detektionsoptik angeordnet ist und besonders bevorzugt an einer der transparenten Wandung gegenüberliegenden Seite des Behälters ein konkaver Reflektor angeordnet ist.

Ferner kann der Fluidkanal zumindest bereichsweise mindestens eine transparente Wandung aufweisen, die für Licht mit einer Wellenlänge im Bereich der Anregungswellenlänge des Fluoreszenz-Markers durchlässig ist.

Abgesehen davon kann der Fluidkanal zumindest bereichsweise mindestens eine transparente Wandung aufweisen, die für Licht mit einer Wellenlänge im Bereich der Anregungswellenlänge und der Emissionswellenlänge des Fluoreszenz-Markers durchlässig ist, wobei zwischen der transparenten Wandung und der Spektralen Analyseeinheit eine Detektionsoptik mit einem Einkoppelelement für das Licht der Lichtquelle angeordnet ist, wobei das Einkoppelelement für Licht mit einer Wellenlänge im Bereich der Anregungswellenlänge des Fluoreszenz-Markers reflektiv ist und für Licht mit einer Wellenlänge im Bereich der Emissionswellenlänge des Fluoreszenz-Markers durchlässig ist.

Darüber hinaus kann der Fluidkanal zumindest bereichsweise mindestens eine transparente Wandung aufweisen, die für Licht mit einer Wellenlänge im Bereich der Emissionswellenlänge des Fluoreszenz-Markers durchlässig ist und die eine Implementierung zusätzlicher Sensorik, bevorzugt eines Photodetektors, ermöglicht.

Die Algorithmik-Einheit und die Analyse-Einheit, bevorzugt die Spektrale Analyseeinheit, die Algorithmik-Einheit und die Analyse-Einheit, können als eine einzelne Einheit ausgestaltet sein, bevorzugt monolithisch ausgestaltet sein.

Der im Verfahren und/oder der Vorrichtung eingesetzte Mikroresonator kann ein Material enthalten oder daraus bestehen, das ausgewählt ist aus der Gruppe bestehend aus Polymeren, bevorzugt ausgewählt sein aus der Gruppe bestehend aus Polystyrol, Melaminharz, Polydivinylbenzol, Polymethylmethacrylat, Poly(styrol-co-divinylbenzol), Poly(styrol-co-methylmethacrylat) oder Polydimethylsilan. Der im Verfahren und/oder der Vorrichtung eingesetzte Mikroresonator kann auch ein Material enthalten oder daraus bestehen, das ausgewählt ist aus der Gruppe bestehend aus anorganischen Materialien, bevorzugt ausgewählt sein aus der Gruppe der anorganischen dielektrischen Materialien, wie Silica (SiO2) oder Titandioxid.

Die Adsorbatschicht des in dem Verfahren und/oder der Vorrichtung eingesetzten Mikroresonators kann ein Material enthalten oder daraus bestehen, das ausgewählt ist aus der Gruppe bestehend aus dielektrischen Materialien, insbesondere organischen Materialien, wie Oligomeren, Polymeren, Peptiden, Proteinen, Oligonukleotiden, DNS oder Zellbestandteilen sowie Mischungen oder Verbindungen aus diesen Materialien. Des Weiteren können Metalle, Halbleiter oder Metamaterialien oder deren Kombinationen bzw. Verbindungen genutzt werden, insofern sie nicht zu einer so starken Dämpfung der Resonanz-moden führen, dass diese nicht mehr detektierbar sind.

Ferner kann die Adsorbatschicht des in dem Verfahren und/oder der Vorrichtung eingesetzten Mikroresonators ein Material enthalten oder daraus bestehen, das einen Brechungsindex im Bereich von 1,43 bis 1,47 aufweist.

Darüber hinaus kann die Adsorbatschicht des in dem Verfahren und/oder der Vorrichtung eingesetzten Mikroresonators über nicht-kovalente Wechselwirkungen (z.B. über ionische Wechselwirkungen, Dipol-Dipol-Wechselwirkungen, van-der-Waals-Wechselwirkungen und/oder Wasserstoffbrückenbindungen) an den Mikroresonator gebunden sein. Ferner kann die Adsorbatschicht alternativ oder zusätzlich über kovalente Bindungen (d.h. eine chemische Ankopplung) an den Mikroresonator gebunden sein. Die Art der chemischen Kopplung und damit die Wahl der zur Kopplung eingesetzten Moleküle hängt dabei von der Oberfläche des Mikroresonators und der dort zu Verfügung stehenden funktionellen Gruppen ab.

Abgesehen davon kann die Adsorbatschicht des in dem Verfahren und/oder der Vorrichtung eingesetzten Mikroresonators in mehrere Subschichten unterteilt sein. Die Algorithmik-Einheit kann dazu konfiguriert sein, die Adsorbatschicht je nach physikalischem Modell und Kontrast von verschiedenen optischen Brechungsindizes einzelner Subschichten der Adsorbatschicht zueinander als einheitliche Schicht mit mittlerem optischen Brechungsindex (A.L. Aden & M. Kerker, Scattering of electromagnetic waves from two concentric spheres, Journal of Applied Physics, 1951, Vol. 22, Seiten 1242-1246), oder als zusammengesetzte Schicht mit jeweils unterschiedlichen optischen Brechungsindizes (R. Bhandari, Scattering coefficients for a multilayered sphere: analytic expressions and algorithms, Applied Optics, 1985, Vol. 24, Seiten 1960-1967), zu behandeln.

Anhand der nachfolgenden Figuren und Beispiele soll der erfindungsgemäße Gegenstand näher erläutert werden, ohne diesen auf die hier gezeigten, spezifischen Ausführungsformen einschränken zu wollen.

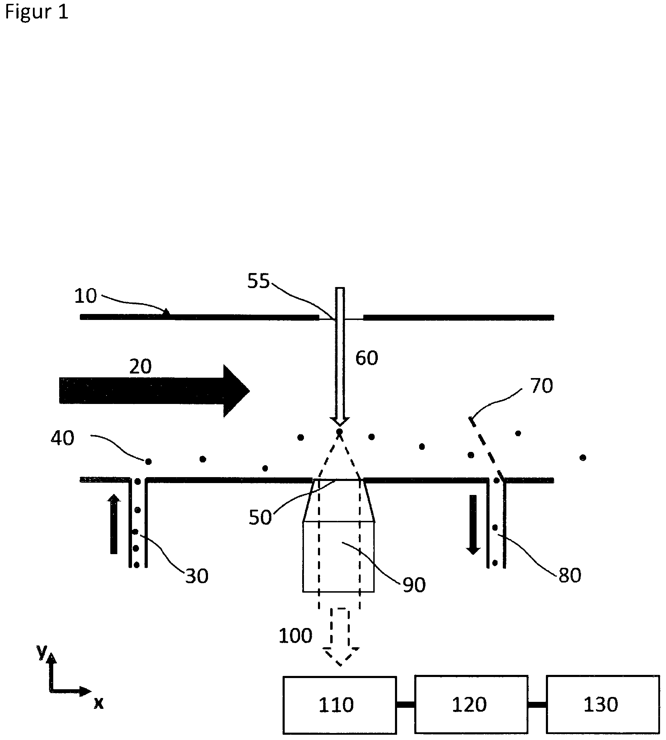

Figur 1 zeigt schematisch eine erfindungsgemäße Vorrichtung mit unterschiedlichen transparenten Wandungen 50, 55 in einem Gefäß (hier: ein Mikrokanal) für Anregung der Mikrosensoren 40 mit Anregungslicht 60 und Auslese von Fluoreszenzlicht 100 der Mikrosensoren 40. In einem Strömungskanal 10 bewegt sich ein Fluid 20, welches durch Zugabe von WGM-basierten Mikrosensoren 40 über ein Dosiersystem 30 auf Präsenz und Konzentration gewünschter Analyten hin geprüft werden soll. Die Mikrosensoren 40 strömen über eine gewisse Strecke mit dem Fluid, können durch eine transparente Wandung 55 mit Hilfe des Anregungslichts 60 fluoreszent angeregt werden. Die Fluoreszenzemission 100 wird über die weitere transparente Wandung 50 und die nachfolgende Detektionsoptik 90 in die Spektrale Analyseeinheit 110 geleitet. Hier wird das Licht spektroskopisch ausgelesen. Im weiteren Strömungsverlauf können die Mikrosensoren 40 optional durch eine geeignete Fangeinrichtung 70 in Kombination mit einem Auslass 80 wieder aus dem Fluid entfernt zu werden. Im Falle unkritischer Fluide, wie beispielsweise Abwässern, können die Mikrosensoren auch im Abstrom des Fluids verbleiben, so dass Elemente 70 und 80 entfallen.

Figur 2 zeigt schematisch eine weitere erfindungsgemäße Vorrichtung, die ähnlich wie in Figur 1 ausgestaltet ist, jedoch nur eine einzelne transparente Wandung 50 für Anregung der Mikrosensoren 40 mit Anregungslicht 60 und Auslese von Fluoreszenzlicht 100 der Mikrosensoren 40 aufweist.

Figur 3 zeigt schematisch eine weitere erfindungsgemäße Vorrichtung, die ähnlich wie in Figur 1 ausgestaltet ist, jedoch eine alternative Orientierung des Anregungslichts 60 sowie eine unterschiedlicher Strahlformung aufweist (kollimiert in Figur 3a und fokussiert in Figur 3b).

Figuren 4A zeigt exemplarisch die von einem Mikrosensor erhaltene Fluoreszenzemission in Abhängigkeit von der Wellenlänge, wobei die verschiedenen Resonanzmoden mit unterschiedlichen Polarisationszuständen TM, TE dargestellt sind.

Figur 4B zeigt schematisch den Aufbau eines Mikrosensors 40. Dieser besteht aus einem Mikroresonator 43 und einer Adsorbatschicht 45.

Figur 4C zeigt exemplarisch die Zunahme der Resonanzmoden TM, TE im Spektrum in Abhängigkeit von einer Zunahme des Durchmessers des Mikrosensors.

Figur 4D zeigt exemplarisch die Zunahme der Resonanzmoden TM, TE im Spektrum des Mikrosensors in Abhängigkeit von einer Zunahme der Dicke seiner Adsorbatschicht (aufgrund einer Anbindung von Analyt an die Adsorbatschicht).

Figur 5A zeigt exemplarisch Simulationen von WGM-Spektren 170 eines Mikroresonators (d.h. dielektrischen Mikrosensors), der einen Radius von R = 3400 nm, einen inneren Brechungsindex von 1.59 (näherungsweise für Polystyrol) und keine Adsorbatschicht aufweist (d.h. die Schichtdicke der Adsorbatschicht wurde auf 0 nm gesetzt), in den Mikroresonator umgebenden Medien mit jeweils unterschiedlichen Brechungsindizes 175. Die WGM-Spektren 170 in Figur 5A wurden untergrundkorrigiert und anschließend normiert auf ihr jeweiliges Maximum vor Korrektur des Untergrunds.

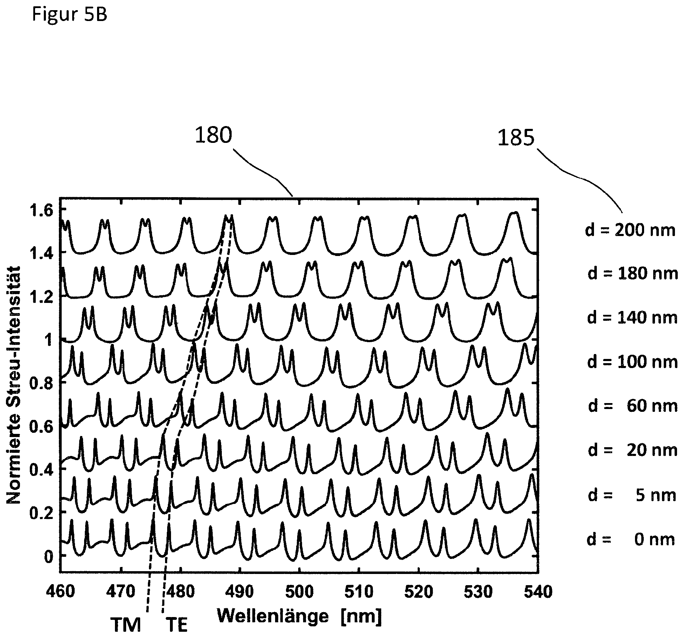

Figur 5B zeigt exemplarisch numerische Simulationen von WGM-Spektren 180 eines Mikroresonators (d.h. dielektrischen Mikrosensors), der einen Radius von R = 3400 nm, einen inneren Brechungsindex von 1.59 (näherungsweise für Polystyrol) und entweder keine Adsorbatschicht aufweist (die Schichtdicke 185 der Adsorbatschicht wurde auf 0 nm gesetzt) oder eine Adsorbatschicht bestimmter Schichtdicke 185 aufweist (d.h. die Schichtdicke 185 der Adsorbatschicht wurde auf 5 nm, 20 nm, 60 nm, 100 nm, 140 nm, 180 nm bzw. 200 nm gesetzt), in den Mikroresonator umgebendem Medium mit einem Brechungsindex von 1.33. Die Adsorbatschicht wies dabei einen Brechungsindex von m_{Ads} = 1.48 auf. Die WGM-Spektren 180 in Figur 5B wurden untergrundkorrigiert und anschließend normiert auf ihr jeweiliges Maximum vor Korrektur des Untergrunds.

### Beispiel 1 - Prinzip des erfindungsgemäßen Verfahrens

Wesentlich für die Detektion eines Analyten in einem Fluid (der Analyseprobe) und damit von Bindungsereignissen an die Oberfläche des Mikrosensors ist es, eine Änderung der Dicke der Adsorbatschicht auf dem Mikroresonator, die durch Anbindung des gesuchten Analyten erfolgt, bestimmen zu können.

Im Gegensatz zur Partikelgröße ist die Los-Weise Streuung der Dicke einer spezifisch funktionalisierten Adsorbatschicht schon aufgrund ihrer geringen Gesamtdicke von typischerweise einigen bis wenigen zehn Nanometern relativ gering und kann damit auch ohne eine statistische oder direkte Referenz gut von Adsorptionsereignissen an die Oberfläche der Mikrosensoren innerhalb des evaneszenten Feldes der Resonanzmoden mit Ausdehnungen von etwa 50-100 nm über der Oberfläche des Mikroresonators unterschieden werden. Bei Kenntnis der Adsorbatschichtdicke kann damit ohne Referenz direkt qualitativ und quantitativ auf Bindungsereignisse geschlossen werden.

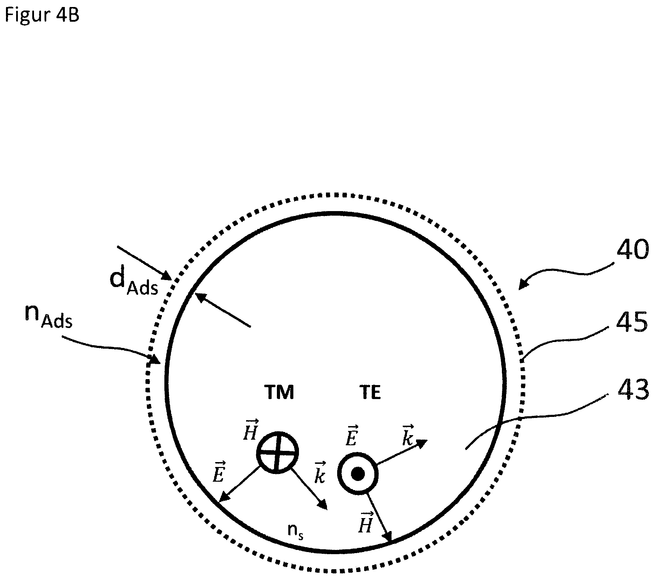

Die Trennung der einzelnen Parameter, wie der Größe des Mikroresonators und der Dicke seiner Adsorbatschicht, können dabei durch ihren unterschiedlichen Einfluss auf die Modenposition der verschiedenen Resonanzmoden des Mikrosensors erfolgen. Es entstehen in dielektrischen (also nichtleitenden und nicht oder nur geringfügig absorbierenden) Mikroresonatoren zwei unterschiedliche Arten von Resonanzmoden mit verschiedenen Ausrichtungen des elektrischen Feldes (vgl. Figur 4B). In einem Falle ist das elektrische Feld der Moden in radialer Richtung hin polarisiert, d.h. das gleichzeitig entstehende magnetische Feld ist tangential zur Partikeloberfläche ausgebildet ("transversal magnetische Mode", kurz "TM"), im anderen Falle ist das elektrische Feld tangential zur Partikeloberfläche und das magnetische Feld in radialer Richtung ausgeprägt ("transversal elektrische Mode", kurz "TE"). Durch diese beiden fundamentalen Arten von Resonanzmoden wird die Grenzfläche zwischen Mikrosensor und seiner Umgebung vollständig erfasst und über rigorose optische Theorien, wie der Mie-Theorie für umhüllte Mikropartikel beschrieben (A.L. A-den & M. Kerker, Scattering of electromagnetic waves from two concentric spheres, Journal of Applied Physics, 1951, Vol. 22, Seiten 1242-1246).

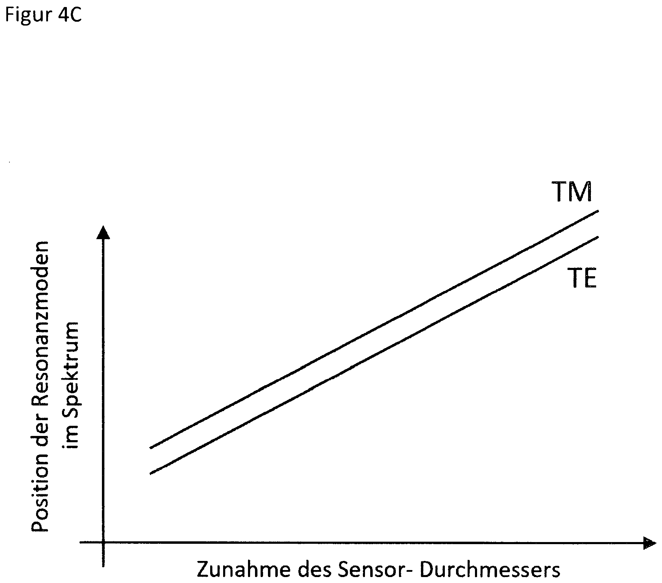

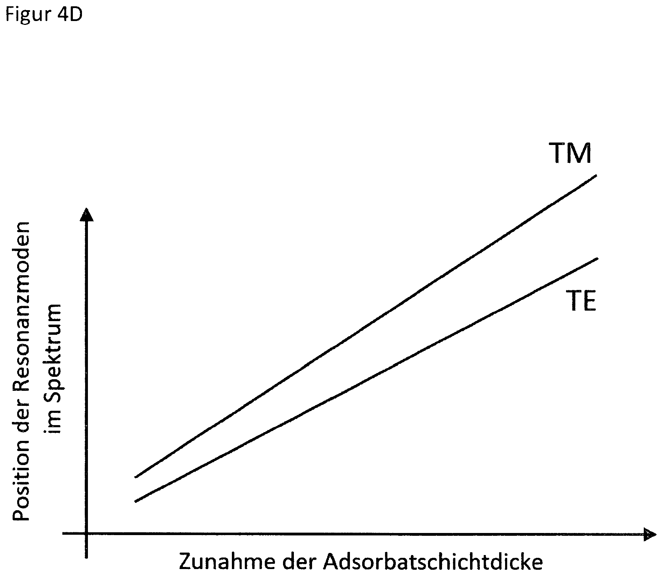

Wichtig für die Trennung der einzelnen Parameter, wie der Dicke der Adsorbatschicht und des Durchmessers des Mikroresonators, ist, dass TM und TE-Moden sich gegenüber Änderungen der Sensorgröße in guter Näherung gleich verhalten, während sie mit zunehmender Dicke der Adsorbatschicht unterschiedlich verschieben (siehe. Figuren 4C und 4D). Beispielsweise zeigen TM-Moden für Polystyrol-basierte Mikrosensoren in wässriger Lösung für die Adsorption von Biomolekülen dabei eine stärkere Verschiebung als TE-Moden (siehe Figur 4D).

Somit ist die Trennung von Größe des Mikroresonators und Dicke der Adsorbatschicht mit Hilfe moderner Rechentechnik, beispielsweise durch numerische Modellierung und Anpassung von Mie-Spektren an die gemessenen Daten, eineindeutig möglich.

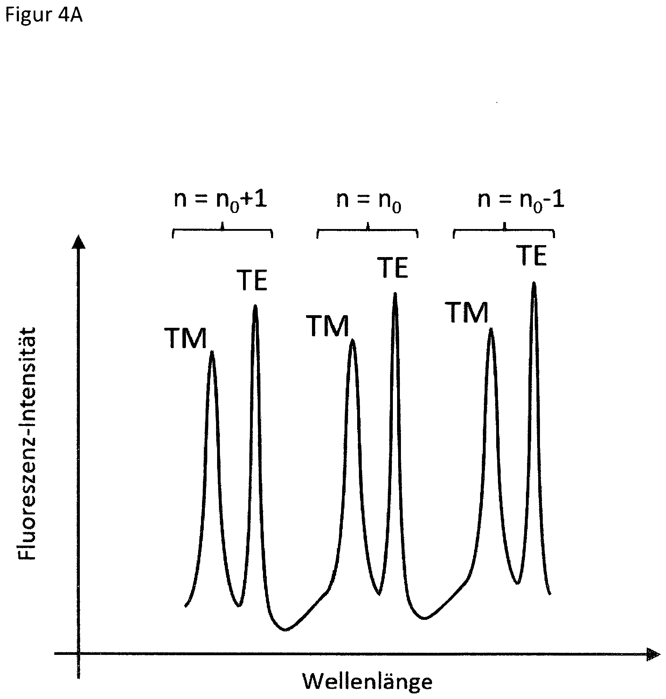

Ein Beispiel für ein von einem Mikrosensor 40 erhaltenes Fluoreszenzspektrum zeigt Figur 4A. Die Resonanzmoden des Mikrosensors 43 sind dem Fluoreszenzhintergrund des Farbstoffes überlagert und können durch dem Stand-der-Technik entsprechende Operationen (wie beispielsweise durch Abzug des Untergrunds und numerische Anpassung von theoretischen Resonanzkurven an die gemessenen Spektren) in spektraler Position, Amplitude und Linienbreite bestimmt werden. Aus diesen für den jeweiligen Mikrosensor (40) und seiner Umgebung zum Zeitpunkt der Messung charakteristischen Größen kann sowohl auf die Größe des Sensors wie auch auf die Dicke seiner Adsorbatschicht zurückgeschlossen werden, beispielsweise durch numerische Anpassung von geeigneten Modellen, wie der Mie-Theorie der mit mindestens einer Hülle umgebenen dielektrischen Sphäre.

Mit Hilfe von Rechentechnik kann daher in kürzester Zeit (typ. innerhalb weniger Sekunden) von den gemessenen Spektren auf das System Mikroresonator 43 mitsamt Adsorbatschicht 45 im Fluid 20 zurückgeschlossen und die für die jeweilige Fragestellung wesentlichen Parameter (wie beispielsweise Sensorgröße, Schichtdicke und optischer Brechungsindex des Adsorbats sowie optischer Brechungsindex der Umgebung) bestimmt werden. Die Trennung der einzelnen Parameter kann dabei durch ihren unterschiedlichen Einfluss auf die Modenposition der verschiedenen Resonanzmoden des Mikrosensors 40 erfolgen.

Neben der Mie-Theorie existieren noch andere optische Modelle der Anregung von Resonanzmoden in Sphären, wie beispielsweise die Debye-Theorie oder das Airy-Modell, welches lediglich eine Näherung darstellt, jedoch den Vorteil hat, dass es analytisch darstellbar ist. Da alle diese existierenden Modelle das gleiche physikalische System beschreiben, können sie analog der Mie-Theorie für die Auffindung der genannten Parameter eingesetzt werden.

### Beispiel 2 - Varianten des Verfahrens bzw. der Vorrichtung

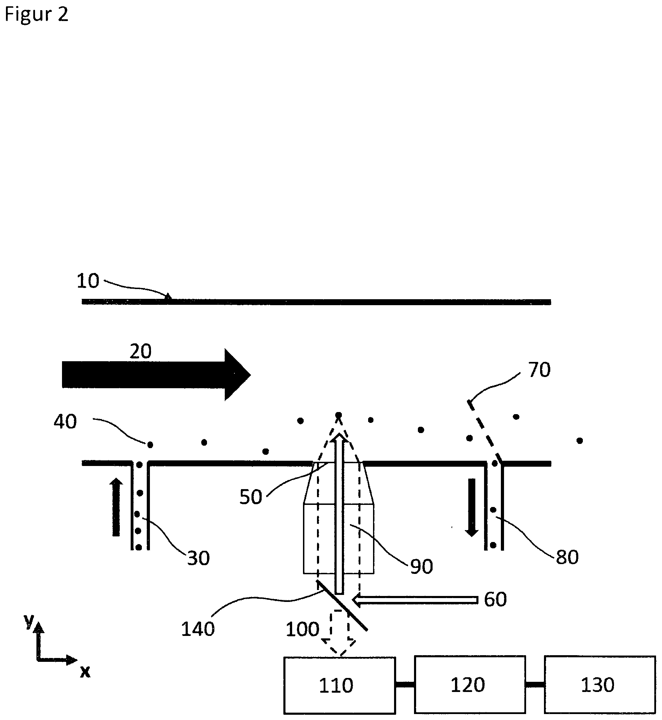

Figuren 1 und 2 zeigen zwei unterschiedliche Ausführungsformen der erfindungsgemäßen Vorrichtung bzw. des erfindungsgemäßen Verfahrens hinsichtlich der Fluoreszenzanregung der Mikrosensoren 40.

In Figur 1 wird das Anregungslicht 60 durch ein gesondertes Zugangsfenster 55 in das Fluid und damit auf mindestens einen vorbeiströmenden Mikrosensor 40 eingestrahlt. Dabei kann das Zugangsfenster 55 dem für die Detektion genutzten Zugangsfenster 50 gegenüberliegen oder derart positioniert werden, dass der im Detektionsbereich befindliche mindestens eine Mikrosensor 40 beleuchtet wird. Ein Vorteil dieser Anordnung ist, dass die dielektrischen Eigenschaften der beiden Zugangsfenster 50, 55 hinsichtlich Transmission, Reflexion und Absorption auf genau auf die jeweilige Strahlung (Fluoreszenzanregung bzw. - emission) angepasst werden können. Mindestens ein Mikrosensor 40, der zufällig den Lichtkegel passiert, wird fluoreszent angeregt und kann durch das Zugangsfenster 50 spektral analysiert werden. Die Detektionsoptik 90 fängt dazu einen Teil des vom mindestens einen Mikrosensor 40 abgestrahlten Fluoreszenzlichts 100 auf und leitet es an eine spektrale Analyseeinheit 110 weiter. Das von der spektralen Analyseeinheit 110 erhaltene spektrale Profil der Fluoreszenzemission 100 des Mikrosensors 40 wird nachfolgend von einer Algorithmik-Einheit 120 hinsichtlich charakteristischer Größen, wie spektraler Position (optional auch relativer Amplitude und/oder Linienbreite) von Resonanzmoden unterschiedlicher Polarisation analysiert und diese Ergebnisse anschließend in einer Analyse-Einheit 130 in Bezug auf Präsenz und/oder Konzentration der gesuchten Analyten hin ausgewertet. Die so erhaltenen Informationen über einen gesuchten Analyten werden von der Vorrichtung dann über geeignete Schnittstellen dem Betreiber der Vorrichtung zu Verfügung gestellt.

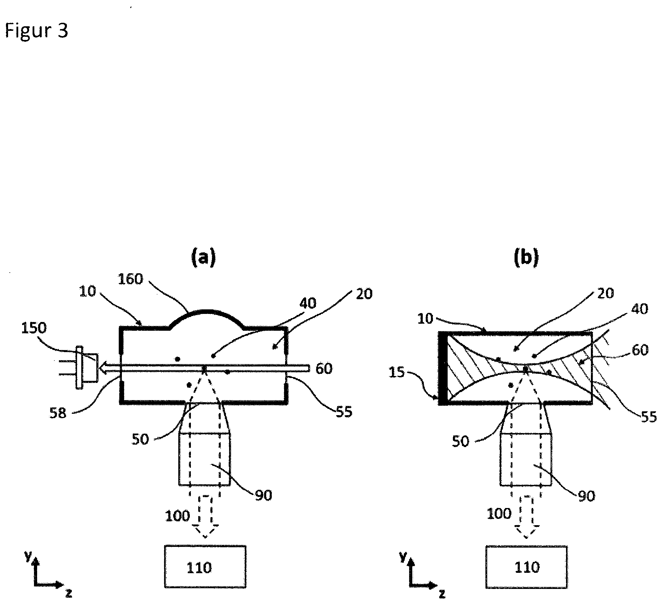

In Figur 2 erfolgt die Anregung der Fluoreszenz 100 des mindestens einen Mikrosensors 40 dagegen von derselben Seite wie die nachfolgende Fluoreszenzdetektion durch das Zugangsfenster 50. Die Detektionsoptik 90 wird dabei zusätzlich dazu genutzt, das Anregungslicht 60 über ein Einkoppelelement 140 durch das Zugangsfenster 50 in das Fluid 20 einzustrahlen. Auch in diesem Falle wird mindestens ein Mikrosensor 40, der im Fluid 20 strömt und zufällig den Lichtkegel des Anregungslichts 60 passiert, zur Fluoreszenz 100 angeregt und, wie zuvor beschrieben, über die Detektionsoptik 90 ausgelesen und hinsichtlich der gewünschten Parameter mit Hilfe der Einheiten 110, 120, 130 analysiert. Wichtig ist dabei, dass das Einkoppelelement 140 für die von der Detektionsoptik 90 aufgefangene Fluoreszenzemission 100 des Mikrosensors 40 transparent ist, um weiterhin (wie im Falle der Figur 1) in die spektrale Analyseeinheit 110 gelangen zu können. Auch an das Zugangsfenster 50 werden nun höhere Anforderungen gestellt, da es jetzt nicht nur transparent für die Fluoreszenzemission 100 sein muss, sondern auch für das Anregungslicht 60. Vorteilhaft an dieser Ausführungsform ist jedoch, dass nun die dem Zugangsfenster 50 gegenüberliegende Wandung des Strömungskanals 10 als Reflektor 160 für die Fluoreszenzemission 100 des Mikrosensors 40 ausgeführt werden kann (vgl. hierzu auch Figur 3a), so dass die Detektionsoptik 90 das Fluoreszenzlicht über einen größeren Raumwinkel hinweg einsammeln kann, wodurch sich wiederum höhere Signalintensitäten, kürzere Messzeiten und letztlich ein größerer Bereich an möglichen Fließgeschwindigkeiten für das Fluid ergeben.

Die Figuren 1 und 2 stellen zwei grundlegende Ausführungsformen der Erfindung dar, die in vielerlei Hinsicht modifiziert werden können. Beispielsweise zeigt die Figur 3 zwei verschiedene Abwandlungen.

In der Ausgestaltungform der Figur 3 entspricht die Strömungsrichtung des Fluids auch in dieser Figur der x-Achse. Das Anregungslicht 60 wird hier nicht mehr in der optischen Achse der Detektionsoptik 90 geführt, sondern unter einem anderen Winkel in das Fluid 20 eingestrahlt. Hierbei ist der gezeigte Winkel von 90 Grad zur optischen Achse der Detektionsoptik 90 nur ein Beispiel. Figur 3a und 3b unterscheiden sich zudem in der Ausformung des zur Fluoreszenzanregung 100 genutzten Anregungslichts 60. In Figur 3a ist das Anregungslicht 60 kollimiert, in Figur 3b auf den Fokus der Detektionsoptik 90 hin fokussiert. Letztere Ausführungsform hat den Vorteil, dass nur Mikrosensoren in unmittelbarer Nähe des Fokus der Detektionsoptik 90 nennenswert zur Fluoreszenz 100 angeregt werden, so dass potenzielle Störsignale durch mindestens einen Mikrosensor 40, der sich an einer für die Detektion ungeeigneten Position im Fluid 20 befindet, reduziert werden. Wie oben bereits für Figur 2 erwähnt, kann auch für die in Figur 3 illustrierten Ausführungsformen die dem Zugangsfenster 50 gegenüberliegende Kanalwandung als Reflektor 160 zur Signalerhöhung des von der Detektionsoptik 90 aufgesammelten Fluoreszenzlichts des mindestens einen Mikrosensors 40 dienen.

Weiterhin zeigt Figur 3a potenziell nützliche zusätzliche Sensorik in Form eines weiteren Zugangsfensters 58 und einem dahinter liegenden Photodetektor 150, der zur weiteren Charakterisierung des Fluids 20 genutzt werden kann, beispielsweise zu Trübungsmessungen, die einen Aufschluss über den Festkörpergehalt des Fluids geben und so die Analyse-Einheit 130 in der Interpretation der Messergebnisse unterstützen können. Befindet sich kein zusätzliches Zugangsfenster 58 im Strahlengang des Anregungslichts 60, wie in Figur 3b illustriert, kann das Anregungslicht 60 über die rückwärtige Wandung 15 des Strömungskanals 10 modifiziert, beispielsweise absorbiert oder reflektiert, werden, um entweder unerwünschte Effekte, wie Anregung von mindestens einem Mikrosensor 40, der schlecht positioniert ist, zu unterdrücken oder auch, um gewünschte Effekte zu erzielen, wie die Erhöhung der Intensität des Anregungslichts 60 im Detektionsvolumen der Detektionsoptik 90.

Je nach Fluid 20, seiner Komposition, seiner Umgebung, seiner Verwendung oder anderen, für die Analyse des Fluids 20 maßgeblichen Einflussfaktoren, kann es sein, dass die Mikrosensoren nicht, wie in den Figur 1-3 dargestellt, direkt in das Fluid hineingegeben werden können, sondern ein Teil des Fluids 20 für die Analyse vom Strömungskanal 10 abgesondert werden muss. Auch in diesen Fällen ist es aber immer möglich, nach geeigneter Absonderung oder Aufbereitung des zur Analyse gewählten Teils des Fluids 20 wieder einen Strömungskanal zu erhalten, der den Figuren 1-3 entspricht, so dass die hier dargestellten Ausführungsformen von ausreichender Allgemeingültigkeit auch in komplexeren Anwendungen der hier vorgestellten Mikrosensorik sind.

### Beispiel 3 - Vorzüge des erfindungsgemäßen Verfahrens

Das erfindungsgemäße Verfahren nutzt die Bestimmung einer optischen Dicke der Adsorbatschicht des mindestens einen Mikrosensors in einem potenziell einen Analyten enthaltenden Fluid sowie ihrer Änderung, die durch Anbindung des gesuchten Analyten erfolgt, für die Messung der Präsenz des Analyten im Fluid. Die Vorzüge der Nutzung einer optischen Dicke der Adsorbatschicht gegenüber anderen möglichen Parametern, wie beispielsweise des Brechungsindizes des Mediums, m₀, in dem sich der Mikrosensor befindet, soll im Folgenden ausgeführt werden.

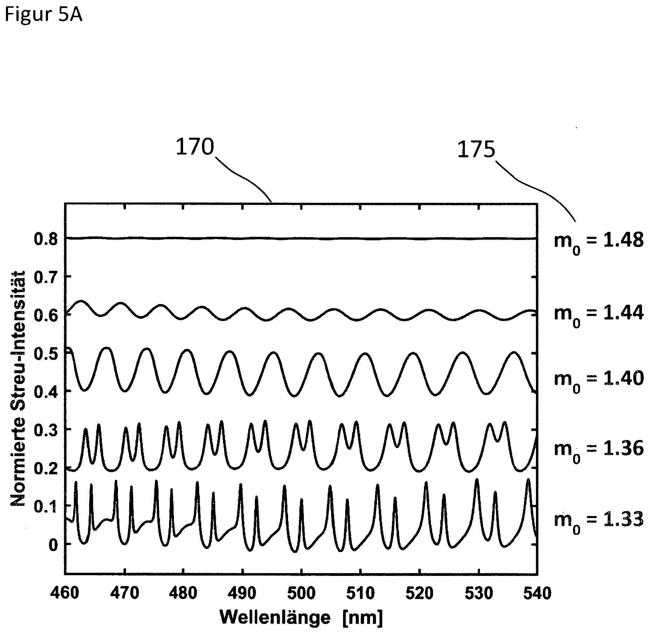

Figur 5A zeigt dazu numerische Simulationen von WGM-Spektren 170 eines Mikroresonators (d.h. dielektrischen Mikrosensors), der einen Radius von R = 3.4 µm, einen inneren Brechungsindex von 1.59 (näherungsweise für Polystyrol) und keine Adsorbatschicht aufweist (d.h. die Schichtdicke der Adsorbatschicht wurde auf 0 nm gesetzt), in den Mikroresonator umgebenden Medien mit jeweils unterschiedlichen Brechungsindizes 175. Die Spektren 170 wurden mit Hilfe der Mie-Theorie für eine in ein Medium eingebettete dielektrische Sphäre berechnet (nach Craig F. Bohren & Donald R. Huffman, Absorption and Scattering of Light by Small Particles, 1998, Wiley-VCH-Verlag, ISBN 9780471 293408, umgesetzt in Matlab 2021b^{®}), wie auch beim Stand-der-Technik üblich. Zur besseren Vergleichbarkeit wurden die WGM-Spektren 170 untergrundkorrigiert, d.h., die auftretenden langwelligen Schwebungen entfernt, da für das Folgende nur das Verhalten der WGM-Moden von Bedeutung ist. Nach Korrektur des Untergrunds wurden die Spektren auf das jeweilige ursprüngliche Maximum, d.h. das Maximum vor der Korrektur des Untergrunds, normiert, um die jeweiligen WGM-Amplituden vergleichbar zu halten. Die in Figur 5B gezeigten Spektren 180 wurden analog prozessiert. Die gewählte Größe des Mikroresonators von 6,8 µm im Durchmesser ist ein Wert, der sich in der Praxis als Kompromiss zwischen Größe der Resonatoroberfläche und Güte der anregbaren WGMs bewährt hat. Ist der Mikroresonator größer, nimmt die relative Fläche, die ein adsorbierter Analyt auf der Mikrosensoroberfläche einnimmt, ab und die Modenverschiebung fällt entsprechend kleiner aus. Ist der Mikroresonator kleiner, nehmen die Verluste der WGM-Anregung, beispielsweise durch Oberflächenstreuung und Strahlungsverluste, zu, so dass die einzelnen WGMs nur schlecht ausgeprägt und daher schlecht verarbeitbar sind.

Figur 5A macht deutlich, dass die Linienbreite der WGM bei dieser Mikroresonatorgröße mit zunehmendem Brechungsindex 175 des Mediums, m₀, schnell anwächst und dies dazu führt, dass schon bei Werten, die noch unter den für biologische Materialien zu erwartenden Brechungsindizes 175 liegen (wie gezeigt ab etwa m₀ = 1.40), TM und TE-Moden sich zu überlagern beginnen, so dass eine experimentelle Bestimmung von m₀ in einer für die Detektion von (biologischen) Analyten bzw. Adsorbaten (wie z. B. von Bakterien wie in der US 8,779,389 B2), erforderlichen Qualität praktisch unmöglich wird. In der Praxis bedeutet dies, dass die Nutzung des Brechungsindizes 175 des Mediums, m₀, als Indikator für die Detektion von (biologischen) Analyten bzw. Adsorbaten Grenzen gesetzt sind: der mittlere Brechungsindex 175 in unmittelbarer Nähe des Mikrosensors, also im Bereich des evaneszenten Feldes der WGM, sollte unter m_{eff} = 1.40 bleiben, womit wegen der höheren Werte für den Brechungsindex des Adsorbats von typisch 1,43-1,48 nur geringe Oberflächenbedeckungen, also kleine Adsorbatkonzentrationen, und auch nur geringe Analytkonzentrationen im Medium (d.h. dem Fluid) erlaubt sind.

Im Gegensatz dazu sind bei Nutzung einer optischen Dicke der Adsorbatschicht des mindestens einen Mikrosensors - wie in dem erfindungsgemäßen Verfahren und der erfindungsgemäßen Vorrichtung - beliebige Brechungsindizes für Analyt und Adsorbatschicht möglich, d.h., es können beliebig hohe Adsorbatkonzentrationen auf der Oberfläche des Mikrosensors bis hin zur vollständigen Bedeckung gemessen werden. Dies wird in Figur 5B illustriert. Figur 5B zeigt numerische Simulationen von WGM-Spektren 180 eines Mikroresonators (d.h. dielektrischen Mikrosensors), der einen Radius von 3.4 µm, einen inneren Brechungsindex von 1.59 (näherungsweise für Polystyrol) und entweder keine Adsorbatschicht aufweist (die Schichtdicke 185 der Adsorbatschicht wurde auf 0 nm gesetzt) oder eine Adsorbatschicht bestimmter Schichtdicke 185 aufweist (d.h. die Schichtdicke 185 der Adsorbatschicht wurde auf 5 nm, 20 nm, 60 nm, 100 nm, 140 nm, 180 nm bzw. 200 nm gesetzt) in den Mikroresonator umgebendem Medium mit einem Brechungsindex von 1.33, Die Adsorbatschicht wies dabei einen Brechungsindex von m_{Ads} = 1.48 auf. Die Simulationen wurden ausgeführt nach der Theorie für eine beschichtete Kugel nach Bohren & Hofmann (Craig F. Bohren & Donald R. Huffman, Absorption and Scattering of Light by Small Particles, 1998, Wiley-VCH-Verlag, ISBN 9780471293408) und wie zuvor in Matlab 2021b^{®} ausgeführt. Trotz des hohen Brechungsindizes der Adsorbatschicht von m_{Ads} = 1.48 sind die WGM überraschenderweise nun bis hin zu großen und für die Praxis häufig gar nicht mehr relevanten Schichtdicken 185 der Adsorbatschicht immer noch gut zu erkennen, und vor allem TM- und TE-Moden separierbar. Mit dieser Unterscheidbarkeit lassen sich, wie zuvor bereits für Figur 4D diskutiert, auf Basis einer rigorosen Theorie, bei der sämtliche Parameter physikalische Bedeutung haben, alle relevanten Parameter, insbesondere die optische Dicke der Adsorbatschicht bestimmen, und zwar grundsätzlich für beliebige Brechungsindizes von Analyt und Adsorbatschicht. Gleichzeitig zeigt sich, dass die Vernachlässigung einer Adsorbatschicht auf dem Mikroresonator bei der Simulation von Streu-Spektren auf Basis der Mie-Theorie zu anderen und womöglich irreführenden Ergebnissen führt, da mit der Änderung des Brechungsindizes der Umgebung, m₀, immer gleich die gesamte Umgebung des Mikroresonators geändert wird und somit eine nur teilweise Füllung des evaneszenten Feldes um den Mikroresonator herum nicht beschrieben werden kann. Verfahren und Vorrichtungen aus dem Stand der Technik, welche die Adsorbatschicht auf dem Mikroreaktor unberücksichtigt lassen, können daher bei einer Änderung des Brechungsindex der Umgebung (z.B. des umgebenden Mediums) zu falschen Ergebnissen führen.

Somit ist die Nutzung der optischen Dicke der Adsorbatschicht ein allgemeinerer und vielseitiger einsetzbarer Parameter für die Detektion von Analyten im Fluid. Das erfindungsgemäße Verfahren und die erfindungsgemäße Vorrichtung sind daher vielseitiger einsetzbar und zuverlässiger als die bisherigen Verfahren und Vorrichtungen des Stands der Technik, d.h. können ein Risiko von falschen Ergebnissen aufgrund einer Änderung des Brechungsindexes der Umgebung des Mikroresonators vermeiden.

### Bezugszeichenliste

- 10:: Fluidkanal (Strömungskanal);
- 15:: Wandung des Fluidkanals mit speziellen Eigenschaften zur Absorption oder Reflexion des Anregungslichts;
- 20:: Fluid in Strömung (z.B. wässrige Lösung in Strömung);
- 30:: Zuleitung für mindestens einen Mikrosensor;
- 40:: Mikrosensor;
- 43:: Mikroresonator (d.h. Partikel, das ein dielektrisches Material und einen Fluoreszenz-Marker enthält oder daraus besteht);
- 45:: Adsorbatschicht;
- 50:: transparente Wandung Fluidkanal für die Fluoreszenzdetektion;
- 55:: transparente Wandung im Fluidkanal für die Fluoreszenzanregung);
- 58:: transparente Wandung im Fluidkanal zur Implementierung zusätzlicher Sensorik, z.B. eines Photodetektors;
- 60:: Anregungslicht;
- 70:: Abscheider für mindestens einen Mikrosensor;
- 80:: Auslass für mindestens einen Mikrosensor;
- 90:: Detektionsoptik;
- 100:: Fluoreszenzlicht des mindestens einen Mikrosensors;
- 110:: Spektrale Analyseeinheit;
- 120:: Algorithmik-Einheit;
- 130:: Analyse-Einheit;
- 140:: Einkoppelelement für das Licht der Lichtquelle (Anregungslicht);
- 150:: Photodetektor;
- 160:: Konkaver Reflektor;
- 170:: WGM-Spektren eines Mikroresonators ohne Adsorbatschicht in Medien mit unterschiedlichen Brechungsindizes;
- 175:: Brechungsindex des Mediums, das den Mikroresonator umgibt;
- 180:: WGM-Spektren eines Mikroresonators ohne bzw. mit Adsorbatschicht in einem Medium mit einem Brechungsindex von 1.33;
- 185:: Schichtdicke der Adsorbatschicht.

## Patentansprüche

1. Verfahren zur markierungsfreien Detektion eines Analyten in einem Fluid, umfassend die Schritte
a) Bereitstellung von mindestens einem dielektrischen Mikrosensor in einem Behälter, wobei der mindestens eine Mikrosensor einen Mikroresonator und eine auf dem Mikroresonator aufgebrachte Adsorbatschicht zur Anbindung eines Analyten enthält oder daraus besteht, wobei der Mikroresonator aus einem Partikel besteht, das ein dielektrisches Material und einen Fluoreszenz-Marker enthält oder daraus besteht, wobei der Mikroresonator einen größeren optischen Brechungsindex aufweist als der optische Brechungsindex eines zu analysierenden Fluids, wobei der Mikroresonator dazu geeignet ist, in einem Innenraum des Mikroresonators bei einer Anregung einer Fluoreszenz des Fluoreszenz-Markers eine Ausprägung von mehr als einer Resonanzmode zuzulassen;
b) Kontaktieren des mindestens einen Mikrosensors mit einem zu analysierenden Fluid, das einen Analyten enthalten könnte;
c) Einstrahlen von Licht auf den mindestens einen Mikrosensor in dem Fluid, wobei das Licht eine Wellenlänge aufweist, die dazu geeignet ist, den Fluoreszenz-Marker des mindestens einen Mikrosensors zur Fluoreszenz anzuregen;
d) Erfassen von mindestens zwei optischen Resonanzmoden des mindestens einen Mikrosensors aus einem detektierten Fluoreszenzlicht des mindestens einen Mikrosensors;
e) Ermittlung einer optischen Dicke der Adsorbatschicht des mindestens einen Mikrosensors in dem Fluid aus spektralen Positionen der mindestens zwei erfassten Resonanzmoden über numerische Algorithmik; und
f) Bestimmung, basierend auf der zuvor ermittelten optischen Dicke der Adsorbatschicht des mindestens einen Mikrosensors, in welchem Maß ein Analyt im Fluid an den mindestens einen Mikrosensor gebunden hat.

2. Verfahren nach Anspruch 1, **dadurch gekennzeichnet, dass** das Partikel des Mikroresonators einen Durchmesser im Bereich von 1 µm bis 20 µm, bevorzugt 2 µm bis 15 µm, besonders bevorzugt 4 µm bis 10 µm, aufweist und/oder die Adsorbatschicht eine Dicke im Bereich von 0,5 nm bis 30 nm, bevorzugt 1 nm bis 20 nm, besonders bevorzugt 1,5 nm bis 10 nm, insbesondere 2 nm bis 8 nm, aufweist, wobei unter der Dicke eine räumliche Ausdehnung der Adsorbatschicht in radialer Richtung von einem Mittelpunkt des Mikroresonators verstanden wird.

3. Verfahren nach einem der vorhergehenden Ansprüche, **dadurch gekennzeichnet, dass** in dem Verfahren vor Schritt b) kein Schritt einer Ermittlung einer optischen Dicke der Adsorbatschicht des mindestens einen Mikrosensors erfolgt.

4. Verfahren nach einem der vorhergehenden Ansprüche, **dadurch gekennzeichnet, dass** die Ermittlung der optischen Dicke der Adsorbatschicht aus spektralen Positionen der mindestens zwei erfassten Resonanzmoden und mindestens einem weiteren Parameter, der ausgewählt ist aus der Gruppe bestehend aus relative Amplituden der mindestens zwei erfassten Resonanzmoden und Linienbreiten der mindestens zwei erfassten Resonanzmoden, über numerische Algorithmik erfolgt.

5. Verfahren nach einem der vorhergehenden Ansprüche, **dadurch gekennzeichnet, dass** ferner
i) aus spektralen Positionen der mindestens zwei erfassten Resonanz-moden, und bevorzugt aus mindestens einem weiteren Parameter, der ausgewählt ist aus der Gruppe bestehend aus relative Amplituden der mindestens zwei erfassten Resonanzmoden und Linienbreiten der mindestens zwei erfassten Resonanzmoden, über numerische Algorithmik ein weiterer Parameter des mindestens einen Mikrosensors ermittelt wird, wobei der weitere Parameter bevorzugt ausgewählt ist aus der Gruppe bestehend aus Durchmesser des mindestens einen Mikrosensors, Brechungsindex des mindestens einen Mikrosensors, Brechungsindex der Adsorbatschicht des mindestens einen Mikrosensors und Kombinationen hiervon; und/oder
ii) aus spektralen Positionen der mindestens zwei erfassten Resonanz-moden, und bevorzugt aus mindestens einem weiteren Parameter, der ausgewählt ist aus der Gruppe bestehend aus relative Amplituden der mindestens zwei erfassten Resonanzmoden und Linienbreiten der mindestens zwei erfassten Resonanzmoden, über numerische Algorithmik ein Parameter des Fluids ermittelt wird, bevorzugt eine optische Eigenschaft des Fluids ermittelt wird.

6. Verfahren nach einem der vorhergehenden Ansprüche, **dadurch gekennzeichnet, dass** der mindestens eine Mikrosensor
i) frei beweglich vorliegt; oder
ii) fixiert vorliegt, insbesondere an einer Innenoberfläche eines Fluidkanals, in dem das Kontaktieren des mindestens einen Mikrosensors mit einem zu analysierenden Fluid, das einen Analyten enthalten könnte, erfolgt, fixiert vorliegt.

7. Verfahren nach einem der vorhergehenden Ansprüche, **dadurch gekennzeichnet, dass** das Erfassen von mindestens zwei optischen Resonanzmoden des mindestens einen Mikrosensors mindestens einmal, optional mehrmals, wiederholt wird, um einen zeitlichen Verlauf der optischen Dicke der Adsorbatschicht des mindestens einen Mikrosensors aus spektralen Positionen der mindestens zwei erfassten Resonanzmoden, und bevorzugt aus mindestens einem weiteren Parameter, der ausgewählt ist aus der Gruppe bestehend aus relative Amplituden der mindestens zwei erfassten Resonanzmoden und Linienbreiten der mindestens zwei erfassten Resonanzmoden, über numerische Algorithmik zu ermitteln, wobei optional ein zeitlicher Verlauf von mindestens einem weiteren Parameter des mindestens einen Mikrosensors aus spektralen Positionen der mindestens zwei erfassten Resonanzmoden, und bevorzugt aus mindestens einem weiteren Parameter, der ausgewählt ist aus der Gruppe bestehend aus relative Amplituden der mindestens zwei erfassten Resonanzmoden und Linienbreiten der mindestens zwei erfassten Resonanzmoden, über numerische Algorithmik ermittelt wird, wobei der mindestens eine weitere Parameter besonders bevorzugt ausgewählt ist aus der Gruppe bestehend aus Durchmesser des mindestens einen Mikrosensors, Brechungsindex des mindestens einen Mikrosensors, Brechungsindex der Adsorbatschicht des mindestens einen Mikrosensors, Brechungsindex des Fluids und Kombinationen hiervon.

8. Vorrichtung zur markierungsfreien Detektion eines Analyten in einem Fluid, enthaltend
a) einen Behälter enthaltend mindestens einen dielektrischen Mikrosensor, wobei der mindestens eine Mikrosensor einen Mikroresonator und eine auf dem Mikroresonator aufgebrachte Adsorbatschicht zur Anbindung eines Analyten enthält oder daraus besteht, wobei der Mikroresonator aus einem Partikel besteht, das ein dielektrisches Material und einen Fluoreszenz-Marker enthält oder daraus besteht, wobei der Mikroresonator einen größeren optischen Brechungsindex aufweist als der optische Brechungsindex eines zu analysierenden Fluids, wobei der Mikroresonator dazu geeignet ist, in einem Innenraum des Mikroresonators bei einer Anregung einer Fluoreszenz des Fluoreszenz-Markers eine Ausprägung von mehr als einer Resonanzmode zuzulassen;
b) eine Lichtquelle zum Einstrahlen von Licht auf den mindestens einen Mikrosensor, wobei das Licht eine Wellenlänge aufweist, die dazu geeignet ist, den Fluoreszenz-Marker des mindestens einen Mikrosensors zur Fluoreszenz anzuregen,
c) eine Spektrale Analyseeinheit, die konfiguriert ist, mindestens zwei optische Resonanzmoden des mindestens einen Mikrosensors aus einem detektierten Fluoreszenzlicht zu erfassen;
d) eine Algorithmik-Einheit, die konfiguriert ist, aus spektralen Positionen der mindestens zwei erfassten Resonanzmoden eine optischen Dicke der Adsorbatschicht des mindestens einen Mikrosensors über numerische Algorithmik zu ermitteln; und
e) eine Analyse-Einheit, die konfiguriert ist, basierend auf der ermittelten optischen Dicke der Adsorbatschicht des mindestens einen Mikrosensors zu bestimmen, in welchem Maß ein Analyt an den mindestens einen Mikrosensor gebunden hat.

9. Vorrichtung nach Anspruch 8, **dadurch gekennzeichnet, dass** das Partikel des Mikroresonators einen Durchmesser im Bereich von 1 µm bis 20, bevorzugt 2 µm bis 15 µm, besonders bevorzugt 4 µm bis 10 µm, aufweist und/oder die Adsorbatschicht eine Dicke im Bereich von 0,5 nm bis 30 nm, bevorzugt 1 nm bis 20 nm, besonders bevorzugt 1,5 nm bis 10 nm, insbesondere 2 nm bis 8 nm, wobei unter der Dicke eine räumliche Ausdehnung der Adsorbatschicht in radialer Richtung von einem Mittelpunkt des Mikroresonators verstanden wird.

10. Vorrichtung nach einem der Ansprüche 8 oder 9, **dadurch gekennzeichnet, dass** die Spektrale Analyseeinheit konfiguriert ist, die Erfassung der mindestens zwei optischen Resonanzmoden des mindestens einen Mikrosensors erst vorzunehmen, nachdem der mindestens eine Mikrosensor mit einem Fluid kontaktiert wurde, das einen Analyten enthalten könnte.

11. Vorrichtung nach einem der Ansprüche 8 bis 10, **dadurch gekennzeichnet, dass** die Algorithmik-Einheit konfiguriert ist, aus spektralen Positionen der mindestens zwei erfassten Resonanzmoden und mindestens einem weiteren Parameter, der ausgewählt ist aus der Gruppe bestehend aus relative Amplituden der mindestens zwei erfassten Resonanzmoden und Linienbreiten der mindestens zwei erfassten Resonanzmoden, eine optischen Dicke der Adsorbatschicht des mindestens einen Mikrosensors über numerische Algorithmik zu ermitteln.

12. Vorrichtung nach einem der Ansprüche 8 bis 11, **dadurch gekennzeichnet, dass** die Algorithmik-Einheit konfiguriert ist,
i) aus spektralen Positionen der mindestens zwei erfassten Resonanz-moden, und bevorzugt aus mindestens einem weiteren Parameter, der ausgewählt ist aus der Gruppe bestehend aus relative Amplituden der mindestens zwei erfassten Resonanzmoden und Linienbreiten der mindestens zwei erfassten Resonanzmoden, über numerische Algorithmik einen weiteren Parameter des mindestens einen Mikrosensors zu ermitteln, wobei der weitere Parameter bevorzugt ausgewählt ist aus der Gruppe bestehend aus Durchmesser des mindestens einen Mikrosensors, Brechungsindex des mindestens einen Mikrosensors, Brechungsindex der Adsorbatschicht des mindestens einen Mikrosensors und Kombinationen hiervon; und/oder
ii) aus spektralen Positionen der mindestens zwei erfassten Resonanz-moden, und bevorzugt aus mindestens einem weiteren Parameter, der ausgewählt ist aus der Gruppe bestehend aus relative Amplituden der mindestens zwei erfassten Resonanzmoden und Linienbreiten der mindestens zwei erfassten Resonanzmoden, über numerische Algorithmik einen Parameter eines Fluids zu ermitteln, bevorzugt eine optische Eigenschaft eines Fluids zu ermitteln.

13. Vorrichtung nach einem der Ansprüche 8 bis 12, **dadurch gekennzeichnet, dass** der Behälter ferner ein Fluid enthält, das einen Analyten enthalten könnte, wobei der Behälter optional ein Fluidkanal ist.

14. Vorrichtung nach einem der Ansprüche 8 bis 13, **dadurch gekennzeichnet, dass** der mindestens eine Mikrosensor
i) im Behälter, optional in einem Fluidkanal der Vorrichtung, frei beweglich vorliegt; oder
ii) in einem Fluidkanal der Vorrichtung fixiert vorliegt, insbesondere an einer Innenoberfläche eines Fluidkanals der Vorrichtung fixiert vorliegt, wobei der Fluidkanal insbesondere dazu geeignet ist, einem zu analysierenden Fluid, das einen Analyten enthalten könnte, den mindestens einen Mikrosensor zuzuführen.

15. Vorrichtung nach einem der Ansprüche 8 bis 14, **dadurch gekennzeichnet, dass** die Spektrale Analyseeinheit konfiguriert ist, das Erfassen von mindestens zwei optischen Resonanzmoden des mindestens einen Mikrosensors mindestens einmal, optional mehrmals, zu wiederholen, und die Algorithmik-Einheit konfiguriert ist, einen zeitlichen Verlauf der optischen Dicke der Adsorbatschicht des mindestens einen Mikrosensors aus spektralen Positionen der mindestens zwei erfassten Resonanzmoden, und bevorzugt aus mindestens einem weiteren Parameter, der ausgewählt ist aus der Gruppe bestehend aus relative Amplituden der mindestens zwei erfassten Resonanzmoden und Linienbreiten der mindestens zwei erfassten Resonanzmoden, über numerische Algorithmik zu ermitteln, wobei die Spektrale Analyseeinheit optional konfiguriert ist, das Erfassen von mindestens zwei optischen Resonanzmoden des mindestens einen Mikrosensors mindestens einmal, optional mehrmals, zu wiederholen, und die Algorithmik-Einheit konfiguriert ist, einen zeitlichen Verlauf von mindestens einem weiteren Parameter des mindestens einen Mikrosensors aus spektralen Positionen der mindestens zwei erfassten Resonanzmoden, und bevorzugt aus mindestens einem weiteren Parameter, der ausgewählt ist aus der Gruppe bestehend aus relative Amplituden der mindestens zwei erfassten Resonanzmoden und Linienbreiten der mindestens zwei erfassten Resonanzmoden, über numerische Algorithmik zu ermitteln, wobei der mindestens eine weitere Parameter besonders bevorzugt ausgewählt ist aus der Gruppe bestehend aus Durchmesser des mindestens einen Mikrosensors, Brechungsindex des mindestens einen Mikrosensors, Brechungsindex der Adsorbatschicht des mindestens einen Mikrosensors, Brechungsindex des Fluids und Kombinationen hiervon.

## Claims

1. Method for the label-free detection of an analyte in a fluid, comprising the steps of
a) providing at least one dielectric microsensor in a container, wherein the at least one microsensor contains or consists of a microresonator and an adsorbate layer applied to the microresonator for binding an analyte, wherein the microresonator consists of a particle which contains or consists of a dielectric material and a fluorescent marker, wherein the microresonator has a higher optical refractive index than the optical refractive index of a fluid to be analysed, wherein the microresonator is suitable for allowing more than one resonance mode to form in an interior of the microresonator upon excitation of fluorescence of the fluorescent marker;
b) contacting the at least one microsensor with a fluid to be analysed which may contain an analyte;
c) irradiating the at least one microsensor in the fluid with light, wherein the light has a wavelength which is suitable for exciting the fluorescent marker of the at least one microsensor to fluoresce;
d) acquiring at least two optical resonance modes of the at least one microsensor from detected fluorescence light of the at least one microsensor;
e) determining an optical thickness of the adsorbate layer of the at least one microsensor in the fluid from spectral positions of the at least two acquired resonance modes by means of numerical algorithms; and
f) establishing, based on the previously determined optical thickness of the adsorbate layer of the at least one microsensor, the extent to which an analyte in the fluid has bound to the at least one microsensor.

2. Method according to claim 1, **characterised in that** the particle of the microresonator has a diameter in the range from 1 µm to 20 µm, preferably 2 µm to 15 µm, particularly preferably 4 µm to 10 µm, and/or the adsorbate layer has a thickness in the range from 0.5 nm to 30 nm, preferably 1 nm to 20 nm, particularly preferably 1.5 nm to 10 nm, in particular 2 nm to 8 nm, wherein the thickness is understood to mean a spatial extent of the adsorbate layer in the radial direction from a centre point of the microresonator.

3. Method according to any one of the preceding claims, **characterised in that** no step of determining an optical thickness of the adsorbate layer of the at least one microsensor takes place in the method before step b).

4. Method according to any one of the preceding claims, **characterised in that** the determination of the optical thickness of the adsorbate layer is carried out from spectral positions of the at least two acquired resonance modes and at least one further parameter, which is selected from the group consisting of relative amplitudes of the at least two acquired resonance modes and linewidths of the at least two acquired resonance modes, by means of numerical algorithms.

5. Method according to any one of the preceding claims, **characterised in that**, furthermore,
i) from spectral positions of the at least two acquired resonance modes, and preferably from at least one further parameter which is selected from the group consisting of relative amplitudes of the at least two acquired resonance modes and linewidths of the at least two acquired resonance modes, a further parameter of the at least one microsensor is determined by means of numerical algorithms, wherein the further parameter is preferably selected from the group consisting of diameter of the at least one microsensor, refractive index of the at least one microsensor, refractive index of the adsorbate layer of the at least one microsensor, and combinations thereof; and/or
ii) from spectral positions of the at least two acquired resonance modes, and preferably from at least one further parameter which is selected from the group consisting of relative amplitudes of the at least two acquired resonance modes and linewidths of the at least two acquired resonance modes, a parameter of the fluid is determined by means of numerical algorithms, preferably an optical property of the fluid is determined.

6. Method according to any one of the preceding claims, **characterised in that** the at least one microsensor
i) is freely movable; or
ii) is fixed, in particular is fixed to an inner surface of a fluid channel in which the contacting of the at least one microsensor with a fluid to be analysed which may contain an analyte takes place.

7. Method according to any one of the preceding claims, **characterised in that** the acquisition of at least two optical resonance modes of the at least one microsensor is repeated at least once, optionally several times, in order to determine a time course of the optical thickness of the adsorbate layer of the at least one microsensor from spectral positions of the at least two acquired resonance modes, and preferably from at least one further parameter which is selected from the group consisting of relative amplitudes of the at least two acquired resonance modes and linewidths of the at least two acquired resonance modes, by means of numerical algorithms, wherein optionally a time course of at least one further parameter of the at least one microsensor is determined from spectral positions of the at least two acquired resonance modes, and preferably from at least one further parameter which is selected from the group consisting of relative amplitudes of the at least two acquired resonance modes and linewidths of the at least two acquired resonance modes, by means of numerical algorithms, wherein the at least one further parameter is particularly preferably selected from the group consisting of diameter of the at least one microsensor, refractive index of the at least one microsensor, refractive index of the adsorbate layer of the at least one microsensor, refractive index of the fluid, and combinations thereof.

8. Device for the label-free detection of an analyte in a fluid, containing
a) a container containing at least one dielectric microsensor, wherein the at least one microsensor contains or consists of a microresonator and an adsorbate layer applied to the microresonator for binding an analyte, wherein the microresonator consists of a particle which contains or consists of a dielectric material and a fluorescent marker, wherein the microresonator has a higher optical refractive index than the optical refractive index of a fluid to be analysed, wherein the microresonator is suitable for allowing more than one resonance mode to form in an interior of the microresonator upon excitation of fluorescence of the fluorescent marker;
b) a light source for irradiating the at least one microsensor with light, wherein the light has a wavelength which is suitable for exciting the fluorescent marker of the at least one microsensor to fluoresce,
c) a spectral analysis unit which is configured to acquire at least two optical resonance modes of the at least one microsensor from detected fluorescence light;
d) an algorithm unit which is configured to determine an optical thickness of the adsorbate layer of the at least one microsensor from spectral positions of the at least two acquired resonance modes by means of numerical algorithms; and
e) an analysis unit which is configured to establish, based on the determined optical thickness of the adsorbate layer of the at least one microsensor, the extent to which an analyte has bound to the at least one microsensor.

9. Device according to claim 8, **characterised in that** the particle of the microresonator has a diameter in the range from 1 µm to 20 µm, preferably 2 µm to 15 µm, particularly preferably 4 µm to 10 µm, and/or the adsorbate layer has a thickness in the range from 0.5 nm to 30 nm, preferably 1 nm to 20 nm, particularly preferably 1.5 nm to 10 nm, in particular 2 nm to 8 nm, wherein the thickness is understood to mean a spatial extent of the adsorbate layer in the radial direction from a centre point of the microresonator.

10. Device according to claim 8 or 9, **characterised in that** the spectral analysis unit is configured to carry out the acquisition of the at least two optical resonance modes of the at least one microsensor only after the at least one microsensor has been contacted with a fluid which may contain an analyte.

11. Device according to any one of claims 8 to 10, **characterised in that** the algorithm unit is configured to determine an optical thickness of the adsorbate layer of the at least one microsensor from spectral positions of the at least two acquired resonance modes and at least one further parameter, which is selected from the group consisting of relative amplitudes of the at least two acquired resonance modes and linewidths of the at least two acquired resonance modes, by means of numerical algorithms.

12. Device according to any one of claims 8 to 11, **characterised in that** the algorithm unit is configured
i) to determine, from spectral positions of the at least two acquired resonance modes, and preferably from at least one further parameter which is selected from the group consisting of relative amplitudes of the at least two acquired resonance modes and linewidths of the at least two acquired resonance modes, a further parameter of the at least one microsensor by means of numerical algorithms, wherein the further parameter is preferably selected from the group consisting of diameter of the at least one microsensor, refractive index of the at least one microsensor, refractive index of the adsorbate layer of the at least one microsensor, and combinations thereof; and/or
ii) to determine, from spectral positions of the at least two acquired resonance modes, and preferably from at least one further parameter which is selected from the group consisting of relative amplitudes of the at least two acquired resonance modes and linewidths of the at least two acquired resonance modes, a parameter of a fluid by means of numerical algorithms, preferably to determine an optical property of a fluid.

13. Device according to any one of claims 8 to 12, **characterised in that** the container further contains a fluid which may contain an analyte, wherein the container is optionally a fluid channel.

14. Device according to any one of claims 8 to 13, **characterised in that** the at least one microsensor
i) is freely movable in the container, optionally in a fluid channel of the device; or
ii) is fixed in a fluid channel of the device, in particular is fixed to an inner surface of a fluid channel of the device, wherein the fluid channel is in particular suitable for supplying the at least one microsensor to a fluid to be analysed which may contain an analyte.

15. Device according to any one of claims 8 to 14, **characterised in that** the spectral analysis unit is configured to repeat the acquisition of at least two optical resonance modes of the at least one microsensor at least once, optionally several times, and the algorithm unit is configured to determine a time course of the optical thickness of the adsorbate layer of the at least one microsensor from spectral positions of the at least two acquired resonance modes, and preferably from at least one further parameter which is selected from the group consisting of relative amplitudes of the at least two acquired resonance modes and linewidths of the at least two acquired resonance modes, by means of numerical algorithms, wherein the spectral analysis unit is optionally configured to repeat the acquisition of at least two optical resonance modes of the at least one microsensor at least once, optionally several times, and the algorithm unit is configured to determine a time course of at least one further parameter of the at least one microsensor from spectral positions of the at least two acquired resonance modes, and preferably from at least one further parameter which is selected from the group consisting of relative amplitudes of the at least two acquired resonance modes and linewidths of the at least two acquired resonance modes, by means of numerical algorithms, wherein the at least one further parameter is particularly preferably selected from the group consisting of diameter of the at least one microsensor, refractive index of the at least one microsensor, refractive index of the adsorbate layer of the at least one microsensor, refractive index of the fluid, and combinations thereof.

## Revendications

1. Procédé de détection sans marquage d'un analyte dans un fluide, comprenant les étapes suivantes :
a) fourniture d'au moins un microcapteur diélectrique dans un récipient, dans lequel ledit au moins un microcapteur contient un microrésonateur et une couche d'adsorbat appliquée sur le microrésonateur pour la liaison d'un analyte, ou en est constitué, dans lequel le microrésonateur est constitué d'une particule qui contient un matériau diélectrique et un marqueur fluorescent, ou en est constituée, dans lequel le microrésonateur présente un indice de réfraction optique supérieur à l'indice de réfraction optique d'un fluide à analyser, dans lequel le microrésonateur est apte à permettre la formation de plus d'un mode de résonance dans un espace intérieur du microrésonateur lors d'une excitation d'une fluorescence du marqueur fluorescent ;
b) mise en contact dudit au moins un microcapteur avec un fluide à analyser susceptible de contenir un analyte ;
c) irradiation dudit au moins un microcapteur dans le fluide avec de la lumière, dans lequel la lumière présente une longueur d'onde apte à exciter la fluorescence du marqueur fluorescent dudit au moins un microcapteur ;
d) acquisition d'au moins deux modes de résonance optiques dudit au moins un microcapteur à partir d'une lumière de fluorescence détectée dudit au moins un microcapteur ;
e) détermination d'une épaisseur optique de la couche d'adsorbat dudit au moins un microcapteur dans le fluide à partir de positions spectrales desdits au moins deux modes de résonance acquis au moyen d'algorithmes numériques ; et
f) établissement, sur la base de l'épaisseur optique de la couche d'adsorbat dudit au moins un microcapteur déterminée au préalable, de la mesure dans laquelle un analyte présent dans le fluide s'est lié audit au moins un microcapteur.

2. Procédé selon la revendication 1, **caractérisé en ce que** la particule du microrésonateur présente un diamètre compris dans la plage de 1 µm à 20 µm, de préférence de 2 µm à 15 µm, de manière particulièrement préférée de 4 µm à 10 µm, et/ou la couche d'adsorbat présente une épaisseur comprise dans la plage de 0,5 nm à 30 nm, de préférence de 1 nm à 20 nm, de manière particulièrement préférée de 1,5 nm à 10 nm, en particulier de 2 nm à 8 nm, l'épaisseur désignant une étendue spatiale de la couche d'adsorbat dans la direction radiale à partir d'un point central du microrésonateur.

3. Procédé selon l'une quelconque des revendications précédentes, **caractérisé en ce que**, dans le procédé, aucune étape de détermination d'une épaisseur optique de la couche d'adsorbat dudit au moins un microcapteur n'a lieu avant l'étape b).

4. Procédé selon l'une quelconque des revendications précédentes, **caractérisé en ce que** la détermination de l'épaisseur optique de la couche d'adsorbat est effectuée au moyen d'algorithmes numériques à partir de positions spectrales desdits au moins deux modes de résonance acquis et d'au moins un paramètre supplémentaire choisi dans le groupe constitué par les amplitudes relatives desdits au moins deux modes de résonance acquis et les largeurs de raie desdits au moins deux modes de résonance acquis.

5. Procédé selon l'une quelconque des revendications précédentes, **caractérisé en ce que**, en outre,
i) à partir de positions spectrales desdits au moins deux modes de résonance acquis, et de préférence à partir d'au moins un paramètre supplémentaire choisi dans le groupe constitué par les amplitudes relatives desdits au moins deux modes de résonance acquis et les largeurs de raie desdits au moins deux modes de résonance acquis, un paramètre supplémentaire dudit au moins un microcapteur est déterminé au moyen d'algorithmes numériques, le paramètre supplémentaire étant de préférence choisi dans le groupe constitué par le diamètre dudit au moins un microcapteur, l'indice de réfraction dudit au moins un microcapteur, l'indice de réfraction de la couche d'adsorbat dudit au moins un microcapteur et leurs combinaisons ; et/ou
ii) à partir de positions spectrales desdits au moins deux modes de résonance acquis, et de préférence à partir d'au moins un paramètre supplémentaire choisi dans le groupe constitué par les amplitudes relatives desdits au moins deux modes de résonance acquis et les largeurs de raie desdits au moins deux modes de résonance acquis, un paramètre du fluide est déterminé au moyen d'algorithmes numériques, de préférence une propriété optique du fluide est déterminée.

6. Procédé selon l'une quelconque des revendications précédentes, **caractérisé en ce que** ledit au moins un microcapteur
i) est librement mobile ; ou
ii) est fixé, en particulier fixé sur une surface intérieure d'un canal fluidique dans lequel a lieu la mise en contact dudit au moins un microcapteur avec un fluide à analyser susceptible de contenir un analyte.

7. Procédé selon l'une quelconque des revendications précédentes, **caractérisé en ce que** l'acquisition d'au moins deux modes de résonance optiques dudit au moins un microcapteur est répétée au moins une fois, éventuellement plusieurs fois, afin de déterminer au moyen d'algorithmes numériques une évolution temporelle de l'épaisseur optique de la couche d'adsorbat dudit au moins un microcapteur à partir de positions spectrales desdits au moins deux modes de résonance acquis, et de préférence à partir d'au moins un paramètre supplémentaire choisi dans le groupe constitué par les amplitudes relatives desdits au moins deux modes de résonance acquis et les largeurs de raie desdits au moins deux modes de résonance acquis, dans lequel, éventuellement, une évolution temporelle d'au moins un paramètre supplémentaire dudit au moins un microcapteur est déterminée au moyen d'algorithmes numériques à partir de positions spectrales desdits au moins deux modes de résonance acquis, et de préférence à partir d'au moins un paramètre supplémentaire choisi dans le groupe constitué par les amplitudes relatives desdits au moins deux modes de résonance acquis et les largeurs de raie desdits au moins deux modes de résonance acquis, ledit au moins un paramètre supplémentaire étant de manière particulièrement préférée choisi dans le groupe constitué par le diamètre dudit au moins un microcapteur, l'indice de réfraction dudit au moins un microcapteur, l'indice de réfraction de la couche d'adsorbat dudit au moins un microcapteur, l'indice de réfraction du fluide et leurs combinaisons.

8. Dispositif de détection sans marquage d'un analyte dans un fluide, contenant
a) un récipient contenant au moins un microcapteur diélectrique, dans lequel ledit au moins un microcapteur contient un microrésonateur et une couche d'adsorbat appliquée sur le microrésonateur pour la liaison d'un analyte, ou en est constitué, dans lequel le microrésonateur est constitué d'une particule qui contient un matériau diélectrique et un marqueur fluorescent, ou en est constituée, dans lequel le microrésonateur présente un indice de réfraction optique supérieur à l'indice de réfraction optique d'un fluide à analyser, dans lequel le microrésonateur est apte à permettre la formation de plus d'un mode de résonance dans un espace intérieur du microrésonateur lors d'une excitation d'une fluorescence du marqueur fluorescent ;
b) une source lumineuse destinée à irradier ledit au moins un microcapteur avec de la lumière, dans lequel la lumière présente une longueur d'onde apte à exciter la fluorescence du marqueur fluorescent dudit au moins un microcapteur,
c) une unité d'analyse spectrale configurée pour acquérir au moins deux modes de résonance optiques dudit au moins un microcapteur à partir d'une lumière de fluorescence détectée ;
d) une unité algorithmique configurée pour déterminer au moyen d'algorithmes numériques une épaisseur optique de la couche d'adsorbat dudit au moins un microcapteur à partir de positions spectrales desdits au moins deux modes de résonance acquis ; et
e) une unité d'analyse configurée pour établir, sur la base de l'épaisseur optique déterminée de la couche d'adsorbat dudit au moins un microcapteur, dans quelle mesure un analyte s'est lié audit au moins un microcapteur.

9. Dispositif selon la revendication 8, **caractérisé en ce que** la particule du microrésonateur présente un diamètre compris dans la plage de 1 µm à 20 µm, de préférence de 2 µm à 15 µm, de manière particulièrement préférée de 4 µm à 10 µm, et/ou la couche d'adsorbat présente une épaisseur comprise dans la plage de 0,5 nm à 30 nm, de préférence de 1 nm à 20 nm, de manière particulièrement préférée de 1,5 nm à 10 nm, en particulier de 2 nm à 8 nm, l'épaisseur désignant une étendue spatiale de la couche d'adsorbat dans la direction radiale à partir d'un point central du microrésonateur.

10. Dispositif selon la revendication 8 ou 9, **caractérisé en ce que** l'unité d'analyse spectrale est configurée pour n'effectuer l'acquisition desdits au moins deux modes de résonance optiques dudit au moins un microcapteur qu'après que ledit au moins un microcapteur a été mis en contact avec un fluide susceptible de contenir un analyte.

11. Dispositif selon l'une quelconque des revendications 8 à 10, **caractérisé en ce que** l'unité algorithmique est configurée pour déterminer au moyen d'algorithmes numériques une épaisseur optique de la couche d'adsorbat dudit au moins un microcapteur à partir de positions spectrales desdits au moins deux modes de résonance acquis et d'au moins un paramètre supplémentaire choisi dans le groupe constitué par les amplitudes relatives desdits au moins deux modes de résonance acquis et les largeurs de raie desdits au moins deux modes de résonance acquis.

12. Dispositif selon l'une quelconque des revendications 8 à 11, **caractérisé en ce que** l'unité algorithmique est configurée pour
i) déterminer au moyen d'algorithmes numériques, à partir de positions spectrales desdits au moins deux modes de résonance acquis, et de préférence à partir d'au moins un paramètre supplémentaire choisi dans le groupe constitué par les amplitudes relatives desdits au moins deux modes de résonance acquis et les largeurs de raie desdits au moins deux modes de résonance acquis, un paramètre supplémentaire dudit au moins un microcapteur, le paramètre supplémentaire étant de préférence choisi dans le groupe constitué par le diamètre dudit au moins un microcapteur, l'indice de réfraction dudit au moins un microcapteur, l'indice de réfraction de la couche d'adsorbat dudit au moins un microcapteur et leurs combinaisons ; et/ou
ii) déterminer au moyen d'algorithmes numériques, à partir de positions spectrales desdits au moins deux modes de résonance acquis, et de préférence à partir d'au moins un paramètre supplémentaire choisi dans le groupe constitué par les amplitudes relatives desdits au moins deux modes de résonance acquis et les largeurs de raie desdits au moins deux modes de résonance acquis, un paramètre d'un fluide, de préférence déterminer une propriété optique d'un fluide.

13. Dispositif selon l'une quelconque des revendications 8 à 12, **caractérisé en ce que** le récipient contient en outre un fluide susceptible de contenir un analyte, le récipient étant éventuellement un canal fluidique.

14. Dispositif selon l'une quelconque des revendications 8 à 13, **caractérisé en ce que** ledit au moins un microcapteur
i) est librement mobile dans le récipient, éventuellement dans un canal fluidique du dispositif ; ou
ii) est fixé dans un canal fluidique du dispositif, en particulier fixé sur une surface intérieure d'un canal fluidique du dispositif, le canal fluidique étant en particulier apte à amener ledit au moins un microcapteur à un fluide à analyser susceptible de contenir un analyte.

15. Dispositif selon l'une quelconque des revendications 8 à 14, **caractérisé en ce que** l'unité d'analyse spectrale est configurée pour répéter au moins une fois, éventuellement plusieurs fois, l'acquisition d'au moins deux modes de résonance optiques dudit au moins un microcapteur, et l'unité algorithmique est configurée pour déterminer au moyen d'algorithmes numériques une évolution temporelle de l'épaisseur optique de la couche d'adsorbat dudit au moins un microcapteur à partir de positions spectrales desdits au moins deux modes de résonance acquis, et de préférence à partir d'au moins un paramètre supplémentaire choisi dans le groupe constitué par les amplitudes relatives desdits au moins deux modes de résonance acquis et les largeurs de raie desdits au moins deux modes de résonance acquis, dans lequel l'unité d'analyse spectrale est éventuellement configurée pour répéter au moins une fois, éventuellement plusieurs fois, l'acquisition d'au moins deux modes de résonance optiques dudit au moins un microcapteur, et l'unité algorithmique est configurée pour déterminer au moyen d'algorithmes numériques une évolution temporelle d'au moins un paramètre supplémentaire dudit au moins un microcapteur à partir de positions spectrales desdits au moins deux modes de résonance acquis, et de préférence à partir d'au moins un paramètre supplémentaire choisi dans le groupe constitué par les amplitudes relatives desdits au moins deux modes de résonance acquis et les largeurs de raie desdits au moins deux modes de résonance acquis, ledit au moins un paramètre supplémentaire étant de manière particulièrement préférée choisi dans le groupe constitué par le diamètre dudit au moins un microcapteur, l'indice de réfraction dudit au moins un microcapteur, l'indice de réfraction de la couche d'adsorbat dudit au moins un microcapteur, l'indice de réfraction du fluide et leurs combinaisons.
